# EUROPÄISCHE PATENTSCHRIFT

(11) **EP 4 409 149 B1**
(45) Veröffentlichungstag und Bekanntmachung des Hinweises auf die Patenterteilung: **06.08.2025**
(21) Anmeldenummer: 22790314.3
(22) Anmeldetag: 23.09.2022
(51) Int. Cl.: F16C 29/00, F16C 29/02, F16C 29/10, F16C 29/12

(54) **LINEARGLEITLAGER MIT AUFRASTBAREM SCHLITTEN**
LINEAR SLIDE BEARING WITH SNAP-ON SLIDE
PALIER LISSE LINÉAIRE AVEC CHARIOT ENCLIQUETABLE

(30) Priorität: 01.10.2021 DE 202021105329 U; 11.04.2022 DE 202022101946 U
(43) Veröffentlichungstag der Anmeldung: 07.08.2024
(73) Patentinhaber: igus GmbH, 51147 Köln (DE)
(72) Erfinder: KÖCHING, Fabian, 46414 Rhede (DE)
(74) Vertreter: Lippert Stachow Patentanwälte Rechtsanwälte
(86) Internationale Anmeldenummer: PCT/EP2022/076495
(87) Internationale Veröffentlichungsnummer: WO 2023/052258

(56) Entgegenhaltungen:
- DE-U1- 9 417 944
- US-A- 3 574 468
- US-A1- 2010 074 711

## Beschreibung

Die Erfindung betrifft ein Gleitlager mit einer Schiene und einem Schlitten, einen Schlitten eines solchen Gleitlagers und eine Verwendung eines solchen Gleitlagers.

Gattungsgemäße Gleitlager sind im Stand der Technik hinreichend bekannt und werden zur gleitenden Führung von Arbeitsvorrichtungen, insbesondere als Linearführung, verwendet. Je nach Anwendungsgebiet können solche Arbeitsvorrichtungen unterschiedlichste Eigenschaften aufweisen. Beispielsweise können solche Arbeitsvorrichtungen Elemente von Werkzeugen sein. Beispielsweise können solche Arbeitsvorrichtungen Halteeinrichtungen sein, beispielsweise für Displays, über die Elemente möglichst einfach verschiebbar montiert werden können. Stets kommt es darauf an, dass das Gleitlager eine möglichst reibungsarme und verschleißfreie Führung der an ihm befestigten Arbeitsvorrichtung entlang einer Schiene ermöglicht. Dabei soll gleichzeitig die Arbeitsvorrichtung zuverlässig an der Schiene gehalten sein. Die Erfindung bezieht sich im Besonderen auf solche Gleitlager, die im Fahrzeugbau, insbesondere bei Nutzfahrzeugen wie etwa Traktoren und Reinigungsfahrzeugen, zum Einsatz kommen. Bei solchen Nutzfahrzeugen ist es oft erwünscht, dass eine Arbeitsvorrichtung auf einfache Weise im Cockpit entlang einer Längsrichtung verschiebbar befestigt wird. Um eine einfache und zuverlässige Montage der Arbeitsvorrichtung zu gewährleisten, wird hierzu üblicherweise das Gleitlager fest im Fahrzeug installiert, indem die Schiene des Gleitlagers an einem Fahrzeugteil befestigt wird, wohingegen die Arbeitsvorrichtung lösbar an dem Schlitten befestigt wird, wozu an Schlitten und Arbeitsvorrichtung zueinander korrespondierende Befestigungseinrichtungen vorgesehen werden. Die im Stand der Technik bekannten Befestigungseinrichtungen genügen jedoch nur unzureichend den Anforderungen, auf platzsparende Weise und einfach bedienbar eine lösbare Fixierung einer Arbeitsvorrichtung an dem Schlitten zu gewährleisten.

Aus der DE 94 17 944 U1 ist eine Klemm- und Bremsvorrichtung für eine Linearführung bekannt. Aus der US 3 574 468 A ist eine optische Bank mit einer prismatischen Führungsschiene bekannt, die von einem bezüglich der Führungsschiene arretierbaren Führungsschlitten umgriffen wird. Weiterer Stand der Technik ist in der US 2010/074711 A1 beschrieben. Der vorliegenden Erfindung liegt die Aufgabe zugrunde, ein Gleitlager, einen Schlitten für ein solches Gleitlager und eine Verwendung eines solchen Gleitlagers bereitzustellen, mit dem bzw. der zumindest ein Problem gattungsgemäßer Gleitlager zumindest teilweise behoben wird.

Als eine Lösung der vorliegenden der Erfindung zugrundeliegenden Aufgabe schlägt die Erfindung ein Gleitlager mit den Merkmalen gemäß Anspruch 1 vor. Das Gleitlager umfasst eine Schiene und einen Schlitten. Die Schiene ist in einer Längsrichtung langgestreckt ausgebildet, damit eine Verschiebbarkeit des Schlittens entlang der Schiene in Längsrichtung ermöglicht ist. Die Schiene weist zwei in Längsrichtung langgestreckt ausgebildete Führungsabschnitte auf, die nebeneinander verlaufen. Die Führungsabschnitte sind somit in einer senkrecht auf der Längsrichtung stehenden Transversalrichtung voneinander beabstandet. Das Vorsehen von zumindest zwei nebeneinander verlaufenden Führungsabschnitten ist zur zuverlässigen Führung des Schlittens an der Schiene förderlich. Der Schlitten weist zu jedem Führungsabschnitt eine diesem jeweils zugeordnete Führungsaufnahme auf. Eine erste Führungsaufnahme des Schlittens ist somit einem ersten Führungsabschnitt der Schiene zugeordnet und eine zweite Führungsaufnahme des Schlittens einem zweiten Führungsabschnitt der Schiene. Da ein erfindungsgemäßes Gleitlager eine Anordnung umfassend Schiene und Schlitten ist, sind Schiene und Schlitten mit ihren Führungsabschnitten bzw. Führungsaufnahmen gezielt zueinander korrespondierend ausgebildet, damit in einem Betriebszustand dieser Anordnung der Schlitten in jeglichen Richtungen senkrecht zur Längsrichtung positionsfest relativ zur Schiene gehalten ist, jedoch in Längsrichtung relativ zur Schiene verschiebbar ist. Üblicherweise ist der Schlitten an der Schiene im Betriebszustand so gehalten, dass er möglichst reibungsarm in Längsrichtung relativ zur Schiene verschiebbar ist. Hierzu liegt die Führungsaufnahme des Schlittens im Betriebszustand üblicherweise in gleitender Anlage an dem zugeordneten Führungsabschnitt der Schiene an, entweder unmittelbar, indem Führungsabschnitt oder Führungsaufnahme aus einem Gleitwerkstoff hergestellt sind, oder mittelbar, indem in der Führungsaufnahme ein Gleitelement vorgesehen ist, das relativ zur Führungsaufnahme positionsfest fixiert ist und bei einer Verschiebung des Schlittens relativ zur Schiene an dem zugeordneten Führungsabschnitt der Schiene anliegend entlanggleitet. Die Führungsaufnahme kann beispielsweise abschnittsweise unmittelbar und abschnittsweise mittelbar an dem Führungsabschnitt anliegen. In dem erläuterten Betriebszustand ist jeder der Führungsabschnitte in der ihm zugeordneten Führungsaufnahme angeordnet und von ihr senkrecht zur Längsrichtung umgriffen unter Festlegung des Schlittens relativ zur Schiene senkrecht zur Längsachse und unter Gewährleistung einer Längsverschiebbarkeit des Schlittens zur Schiene. Die Führungsaufnahme umgreift dabei den zugeordneten Führungsabschnitt zumindest so weit, dass durch das Umgreifen der beiden Führungsabschnitte durch die beiden Führungsaufnahmen die Position des Schlittens relativ zur Schiene senkrecht zur Längsrichtung im Betriebszustand festgelegt ist. Bevorzugt weist jeder der Führungsabschnitte eine Führungsachse auf, entlang der er sich, insbesondere nach Art eines Zylinders, in Längsrichtung erstreckt. Bevorzugt umgreift jede Führungsaufnahme den ihr zugeordneten Führungsabschnitt über mindestens 180° um seine Führungsachse, besonders bevorzugt umgreift zumindest eine der Führungsaufnahme den zugeordneten Führungsabschnitt um mindestens 200°, insbesondere mindestens 220° um seine Führungsachse. Bevorzugt ist zumindest der erste Führungsabschnitt, insbesondere erster und zweiter Führungsabschnitt, nach Art eines Zylinders mit rundem, insbesondere kreisrundem, Querschnitt ausgebildet. Erfindungsgemäß weist der Schlitten einen Schlittenkörper und einen Betätigungsarm auf, die gemeinsam die erste Führungsaufnahme des Schlittens ausbilden. Schlittenkörper und Betätigungsarm bilden somit jeweils einen Aufnahmeteil der Führungsaufnahme aus, mit dem sie jeweils einen Abschnitt des ersten Führungsabschnitts im Betriebszustand umgreifen. Bevorzugt umgreift der vom Schlittenkörper ausgebildete Aufnahmeteil den Führungsabschnitt über einen größeren Winkel um seine Führungsachse hinweg als der vom Betätigungsarm ausgebildete Führungsteil. Bevorzugt umgreifen beide Aufnahmeteile den ersten Führungsabschnitt über einen Winkelbereich von mindestens 30° um dessen Führungsachse. Bevorzugt bildet der Betätigungsarm mindestens 10 %, insbesondere mindestens 20 %, insbesondere zwischen 10 % und 30 % der Fläche aus, mit der die erste Führungsaufnahme in dem Betriebszustand zum ersten Führungsabschnitt diesen umschließend weist. Der Betätigungsarm ist an dem Schlittenkörper zu diesem senkrecht zur Längsrichtung verschiebbar geführt fixiert zum Ermöglichen eines Öffnens der ersten Führungsaufnahme durch Verschieben des Betätigungsarms zum Entnehmen des zugeordneten ersten Führungsabschnitts aus der ersten Führungsaufnahme entlang einer senkrecht zur Längsrichtung verlaufenden Entnahmerichtung. Der Betätigungsarm ist somit zum Schlittenkörper senkrecht zur Längsrichtung, insbesondere in einer senkrecht zur Längsrichtung verlaufenden Verschieberichtung, verschiebbar, während er unverändert an dem Schlittenkörper fixiert ist. Durch das Verschieben ausgehend von dem Betriebszustand ist ein Öffnen der ersten Führungsaufnahme ermöglicht, d. h. dass eine solche Öffnung an einer senkrecht zur Längsrichtung weisenden Seite der ersten Führungsaufnahme gebildet wird, dass der erste Führungsabschnitt durch diese Öffnung aus der ersten Führungsaufnahme entnehmbar ist. Das Öffnen der ersten Führungsaufnahme kann beispielsweise dadurch erfolgen, dass ein Querschnitt der ersten Führungsaufnahme senkrecht zur Längsrichtung durch das Verschieben des Betätigungsarms relativ zum Schlittenkörper vergrößert wird, während die Führung definierende, einerseits vom Betätigungsarm und andererseits vom Schlittenkörper ausgebildete Wandungsabschnitte der ersten Führungsaufnahme senkrecht zur Längsrichtung auseinander bewegt werden, so dass eine entsprechende Öffnung in der Wandung der ersten Führungsaufnahme realisiert wird. An dieser Stelle sei darauf hingewiesen, dass selbstverständlich die erste Führungsaufnahme den ersten Führungsabschnitt in dem Betriebszustand nicht zwingend vollumfänglich umgreift, jedoch zumindest so weit, dass im Zusammenspiel mit dem Umgreifen des zweiten Führungsabschnitts der Schiene durch die zweite Führungsaufnahme der Schlitten in seiner Position senkrecht zur Längsrichtung relativ zur Schiene festgelegt ist, so dass bei Ausübung einer Relativkraft in jedweder Richtung senkrecht zur Längsrichtung der Schlitten nicht von der Schiene entfernbar ist und somit der erste Führungsabschnitt nicht aus der ersten Führungsaufnahme herausführbar ist. Entsprechend weist die Wandung der ersten Führungsaufnahme im Betriebszustand allenfalls solche Öffnungen auf, durch die der erste Führungsabschnitt nicht senkrecht zur Längsrichtung hindurchführbar ist. Besonders bevorzugt ist der Betätigungsarm relativ zum Schlittenkörper senkrecht zur Längsrichtung reversibel beweglich geführt, so dass das Gleitlager reversibel von dem Betriebszustand in einen Montagezustand gebracht werden kann, in dem wie erläutert der erste Führungsabschnitt aus der ersten Führungsaufnahme senkrecht zur Längsrichtung entnehmbar ist, und von dem Montagezustand durch inverses Verschieben wieder in den Betriebszustand gebracht werden kann, in dem der Schlitten senkrecht zur Längsrichtung relativ zur Schiene festgelegt ist.

Die Erfindung bringt im Vergleich zum Stand der Technik wesentliche Vorteile mit sich. Während im Stand der Technik davon ausgegangen wird, dass für eine zuverlässige Führung des Schlittens relativ zur Schiene ein solches Umgreifen des Schlittens um die Schiene erforderlich ist, dass eine Demontierbarkeit einer Arbeitsvorrichtung von dem Schlitten gewährleistet sein muss, damit die Arbeitsvorrichtung von dem Ort entfernt werden kann, an dem das Gleitlager angeordnet ist, geht die Erfindung einen neuen Weg. Durch die besondere Ausgestaltung des Gleitlagers ist es möglich, den Schlitten von der Schiene abnehmbar und wieder auf diese aufsetzbar auszugestalten, so dass der Schlitten dauerhaft an einer Arbeitsvorrichtung montiert sein kann und die Arbeitsvorrichtung gemeinsam mit dem Schlitten an unterschiedlichsten Einsatzorten an einer zu dem Schlitten korrespondierenden Schiene montiert werden kann. Dabei gewährleistet die besondere Ausgestaltung des Schlittens im Zusammenspiel mit der zu ihm korrespondierenden Schiene, dass der Schlitten trotz einer einfachen Lösbarkeit von der Schiene und Anbringbarkeit an der Schiene im Betriebszustand zuverlässig an der Schiene gehalten ist und nur in Längsrichtung relativ zur Schiene beweglich ist. Auf großvolumige Befestigungseinrichtungen an Schlitten und Arbeitsvorrichtung, die ein Lösen der Arbeitsvorrichtung vom Schlitten ermöglichen, kann somit verzichtet werden. Wesentlich ist dabei, dass die Entnehmbarkeit bzw. Anbringbarkeit des Schlittens in einer Richtung senkrecht zur Längsrichtung an der Schiene erfolgen kann. Es ist somit nicht erforderlich, den Schlitten an einem Längsende der Schiene auf diese aufzusetzen, um den Schlitten an der Schiene zu montieren, sondern der Schlitten kann an einer beliebigen Längsposition entlang der Erstreckung der Schiene, entlang derer er relativ zur Schiene im Betriebszustand längsverschieblich gehalten ist, auf die Schiene aufgeclipst werden. Besonders bevorzugt steht der Betätigungsarm oder ein zum Betätigen des Betätigungsarms vorgesehener Betätigungshebel senkrecht zur Längsrichtung über den Schlittenkörper vor, so dass der Betätigungsarm bzw. der Betätigungshebel einen Endabschnitt des Schlittens bildet und von einer Person leicht ergriffen werden kann. Besonders bevorzugt steht der Betätigungsarm bzw. der Betätigungshebel über eine solche Länge senkrecht zur Längsrichtung gegenüber dem Schlittenkörper vor, die mindestens die Hälfte des Abstands der Führungsaufnahmen des Schlittens senkrecht zur Längsrichtung voneinander beträgt. Bevorzugt sind die Führungsaufnahmen in einer Transversalrichtung nebeneinander angeordnet und verlaufen mit ihren Aufnahmeachsen, die im Betriebszustand mit den Führungsachsen fluchten, bevorzugt in Längsrichtung, wobei der Betätigungsarm bzw. der Betätigungshebel in der Transversalrichtung über den Schlittenkörper wie erläutert vorsteht. Hierdurch kann eine besonders einfach zu bedienende Ausgestaltung des Betätigungsarms gewährleistet sein.

In einer Ausführungsform weist der Schlittenkörper einen Grundkörper und einen Befestigungskörper auf, die lösbar aneinander fixiert sind. Bevorzugt ist der Grundkörper einteilig ausgebildet. Der Befestigungskörper ist bevorzugt einteilig, kann jedoch in weniger bevorzugten Ausführungsformen noch mehrteilig ausgebildet sein. Grundkörper und Befestigungskörper können beispielsweise mittels einer Schraube oder mittels eines lösbaren Klemmverschlusses aneinander fixiert sein. Bevorzugt ist der Betätigungsarm nur nach einem Lösen des Grundkörpers und des Befestigungskörpers voneinander von dem Schlittenkörper trennbar. Grundkörper und Befestigungskörper gewährleisten somit eine zuverlässige Fixierung des Betätigungsarms am Schlittenkörper. Indem der Schlittenkörper Grundkörper und Befestigungskörper aufweist, kann der Betätigungsarm besonders robust ausgestaltet und zuverlässig relativ zum Schlittenkörper fixiert sein, während er im fixierten Zustand senkrecht zur Längsrichtung relativ zum Schlittenkörper beweglich gelagert ist.

Erfindungsgemäß ist eine Führung zwischen dem Betätigungsarm und dem Schlittenkörper vorgesehen, mittels derer der Betätigungsarm an dem Schlittenkörper über einen senkrecht zur Längsrichtung verlaufenden Verschiebeweg hinweg verschiebbar geführt fixiert ist. Die Führung ist bevorzugt durch einen ersten Führungsteil des Schlittenkörpers und einen zweiten Führungsteil des Befestigungsarms ausgebildet, wobei der erste Führungsteil bevorzugt gemeinsam von Grundkörper und Befestigungskörper des Schlittenkörpers ausgebildet ist. Der Verschiebeweg verläuft bevorzugt geradlinig entlang einer geraden Verschieberichtung, die senkrecht auf der Längsrichtung steht. Erfindungsgemäß bildet die Führung einen Anschlag aus, der ein Ende des Verschiebewegs definiert, wobei der Betätigungsarm ausgehend von dem Betriebszustand bis zum Erreichen des Anschlags entlang des Verschiebewegs relativ zu dem Grundkörper verschiebbar ist. Das Vorsehen einer Führung, die einen Anschlag bereitstellt, ist zur zuverlässigen Fixierung des Betätigungsarms am Schlittenkörper unter Gewährleistung seiner Verschiebbarkeit zu diesem besonders vorteilhaft. Bevorzugt liegt der Betätigungsarm in dem oben erläuterten Montagezustand am Anschlag an, in dem der erste Führungsabschnitt der Schiene aus der ersten Führungsaufnahme entlang der Entnahmerichtung entnehmbar, und bevorzugt entgegen der Entnahmerichtung wieder einführbar ist. Die Entnahmerichtung kann beispielsweise eine geradlinige oder eine gekrümmte Richtung sein. Besonders bevorzugt ist die Führung eine Linearführung entlang einer senkrecht zur Längsrichtung verlaufenden Transversalrichtung. Allgemein bevorzugt ist die Längsrichtung und ist die Transversalrichtung jeweils eine geradlinige Richtung. Allgemein bevorzugt entspricht die Transversalrichtung der erläuterten Verschieberichtung.

Bei Anlage des Betätigungsarms an dem Anschlag wird eine Öffnung der ersten Führungsaufnahme ausgebildet, durch die der erste Führungsabschnitt entnehmbar ist. Dabei sind die Führungsaufnahmen und die Führungsabschnitte bevorzugt dergestalt zueinander korrespondierend ausgebildet, dass nur nach dem Entnehmen des ersten Führungsabschnitts aus der ersten Führungsaufnahme der zweite Führungsabschnitt senkrecht zur Längsrichtung aus der zweiten Führungsaufnahme entnehmbar ist. Indem der Betätigungsarm in dem Betriebszustand ein Entnehmen des ersten Führungsabschnitts aus der ersten Führungsaufnahme verhindert, ist somit auch ein Entnehmen des zweiten Führungsabschnitts aus der zweiten Führungsaufnahme verhindert. Entsprechend ist im Montagezustand nach Freigabe des ersten Führungsabschnitts ein Entnehmen desselben aus der ersten Führungsaufnahme und anschließend das Entnehmen des zweiten Führungsabschnitts aus der zweiten Führungsaufnahme ermöglicht. Diese kaskadierte Entnehmbarkeit ist zur Realisierung einer einfachen Lösbarkeit bei gleichzeitig zuverlässiger Befestigung des Schlittens an der Schiene im Betriebszustand besonders vorteilhaft. Diese kaskadierte Entnehmbarkeit kann beispielsweise dadurch gewährleistet sein, dass die beiden Führungsaufnahmen die beiden Führungsabschnitte so hintergreifen, dass die erste Führungsaufnahme an einer ersten transversalen Seite des ersten Führungsabschnitts diesen hintergreift und die zweite Führungsaufnahme den zweiten Führungsabschnitt an einer zweiten transversalen Seite diesen hintergreift, wobei die transversalen Seiten in entgegengesetzte Richtung entlang der Transversalrichtung weisen.

In einer Ausführungsform erstrecken sich die beiden Führungsabschnitte jeweils entlang einer ihnen jeweils zugeordneten Führungsachse, die in Längsrichtung verläuft. Bei einer ausgehend von dem Betriebszustand realisierten Anlage des Betätigungsarms am Anschlag der Führung ist der zweite Führungsabschnitt in der zweiten Führungsaufnahme um dessen Führungsachse verdrehbar gelagert und ist der erste Führungsabschnitt durch Verdrehung des Schlittens um die Führungsachse des zweiten Führungsabschnitts aus der ersten Führungsaufnahme entnehmbar. Die Entnahmerichtung ist somit eine um die Führungsachse des zweiten Führungsabschnitts gekrümmt verlaufende Richtung. Der zweite Führungsabschnitt ist somit grundsätzlich so korrespondierend zu der zweiten Führungsaufnahme ausgebildet, dass er in dieser um seine Führungsachse drehbar gelagert ist. Allerdings ist in dem Betriebszustand eine Verdrehbarkeit des zweiten Führungsabschnitts gesperrt, indem der erste Führungsabschnitt in der ersten Führungsaufnahme angeordnet und von dieser hintergriffen ist. An dieser Stelle sei allgemein darauf hingewiesen, dass bevorzugt die beiden Führungsaufnahmen miteinander starr verbunden sind und die beiden Führungsabschnitte miteinander starr miteinander verbunden sind. Durch die Gewährleistung einer Entnehmbarkeit des ersten Führungsabschnitts aus der ersten Führungsaufnahme im Montagezustand bzw. bei Anlage des Betätigungsarms am Anschlag der Führung ist eine Verdrehbarkeit des zweiten Führungsabschnitts unter Entnahme des ersten Führungsabschnitts aus der ersten Führungsaufnahme ermöglicht.

Die Schiene weist einen Schienenkörper auf, wobei die Führungsabschnitte der Schiene jeweils über einen Stegabschnitt mit dem Schienenkörper verbunden sind. Die Führungsaufnahmen weisen jeweils eine in Längsrichtung durchgehende Seitenöffnung auf, durch die hindurch im Betriebszustand die Stegabschnitte zu den in den Führungsaufnahmen angeordneten Führungsabschnitten verlaufen. Die Führungsaufnahmen sind bevorzugt hohlzylindrisch ausgebildet, wobei die Zylinderachse ihrer Führungsachse entspricht und in Längsrichtung verläuft, wobei die Seitenöffnung einem Schlitz in der Mantelöffnung des Hohlzylinders entspricht. Der Hohlzylinder kann beispielsweise einen runden, insbesondere kreisrunden, oder polygonförmigen, insbesondere rechteckigen, Querschnitt aufweisen. Die Stegabschnitte weisen in einer Richtung senkrecht zur Längsrichtung eine geringere Breite als die Führungsabschnitte auf, wobei abgestellt wird auf die Breite des Stegabschnitts relativ zu der Breite des ihm zugeordneten Führungsabschnitts, der über den Stegabschnitt mit dem Schienenkörper verbunden ist. Allgemein bevorzugt erstreckt sich der Schienenkörper in Transversalrichtung zwischen den Führungsabschnitten. Allgemein bevorzugt erstrecken sich die Stegabschnitte ausgehend vom Schienenkörper zum jeweils zugeordneten Führungsabschnitt in einer Richtung, die schräg zur Längsrichtung und schräg zur Transversalrichtung verläuft, wobei die Breite senkrecht zur Längsrichtung und senkrecht zur dieser Erstreckungsrichtung verläuft, mit der sie sich jeweils ausgehend vom Maschinenkörper durch die Seitenöffnung hindurch zum zugeordneten Führungsabschnitt erstrecken. Die Seitenöffnung der ersten Führungsaufnahme weist im Betriebszustand eine Breite auf, die kleiner als die Breite des ihr zugeordneten Führungsabschnitts ist. Hingegen beträgt die Breite der Seitenöffnung der ersten Führungsaufnahme bei Anlage des Betätigungsarms am Anschlag der Führung zumindest die Breite des ersten Führungsabschnitts. Die Breite bezeichnet dabei selbstverständlich jeweils eine Erstreckungslänge in einer selben Richtung. Bei der bevorzugten Ausführungsform kann das Öffnen der ersten Führungsaufnahme somit durch ein Verbreitern der Seitenöffnung der ersten Führungsaufnahme ausgehend vom Betriebszustand erfolgen. Indem im Montagezustand bzw. bei Anlage des Betätigungsarms am Anschlag der Führung die Breite der Seitenöffnung zumindest die Breite des ersten Führungsabschnitts beträgt, bevorzugt größer als diese Breite ist, kann der erste Führungsabschnitt in diesem Zustand leicht aus der ersten Führungsaufnahme entnommen werden.

In einer Ausführungsform umfasst die Führung eine Federeinrichtung, die den Betätigungsarm relativ zum Grundkörper mit einer entlang des Verschiebewegs vom Anschlag weg gerichteten Federkraft beaufschlagt. Bei dieser Ausführungsform ist eine Aufclipsbarkeit des Schlittens auf die Schiene und ein zuverlässiges Halten des Schlittens an der Schiene im Betriebszustand besonders vorteilhaft gewährleistet. Die Federeinrichtung ist dabei dazu vorgesehen, dem Verschieben des Betätigungsarms entlang des Verschiebewegs ausgehend von dem Betriebszustand entgegenzuwirken. Hierdurch kann einem Lösen des Schlittens von der Schiene im Betriebszustand vorgebeugt sein. Bei Ausführungsformen, bei denen ausgehend vom Betriebszustand der Betätigungsarm relativ zum Schlittenkörper in Verschieberichtung bewegbar ist zum Öffnen der ersten Führungsaufnahme, ist die von der Feder auf den Betätigungsarm ausgeübte Federkraft der Verschieberichtung entgegengerichtet. Die Federeinrichtung kann beispielsweise ein Federelement umfassen, das an einem Stützabschnitt des Schlittenkörpers abgestützt ist, der bevorzugt von dem Befestigungskörper des Schlittenkörpers ausgebildet ist. Bevorzugt ist die erste Führungsaufnahme durch einen von dem Betätigungsarm ausgebildeten ersten Aufnahmeteil und einem von dem Schlittenkörper ausgebildeten zweiten Aufnahmeteil ausgebildet, wobei das Federelement zwischen, bevorzugt in Verschieberichtung zwischen, dem Stützabschnitt und dem Aufnahmeteil angeordnet ist und zwischen dem Stützabschnitt und einem von dem ersten Aufnahmeteil ausgebildeten weiteren Stützabschnitt in Verschieberichtung verpresst gehalten ist. Bevorzugt ist das Federelement als Spiralfeder ausgebildet, die sich mit ihrer Federachse in Verschieberichtung erstreckt. Bevorzugt ist die Federkraft, die von der Federeinrichtung auf den Betätigungsarm in jedem beschriebenen Zustand des Schlittens ausübt, zur Aufnahmeachse der ersten Führungsaufnahme hin gerichtet. In einer Ausführungsform ist in dem Betriebszustand der Betätigungsarm durch die Federeinrichtung mit der Federkraft gegen den ersten Führungsabschnitt gepresst gehalten. In einer Ausführungsform weist die Führung einen weiteren Anschlag auf, der ein dem genannten Ende des Verschiebewegs gegenüberliegendes Ende des Verschiebewegs definiert. Bevorzugt liegt der Betätigungsarm im Betriebszustand an diesem weiteren Anschlag an. In einer Ausführungsform, in der die Führung eine Federeinrichtung umfasst, ist der Betätigungsarm im Betriebszustand bevorzugt durch die Federkraft gegen den weiteren Anschlag gepresst gehalten. Im von der Schiene gelösten Zustand des Schlittens, in dem er sich in einer Ruhelage ohne äußere Krafteinwirkung befindet, kann somit der Betätigungsarm zuverlässig am Schlittenkörper fixiert sein, indem der Betätigungsarm durch die Federkraft gegen den weiteren Anschlag gepresst gehalten ist.

In einer Ausführungsform umfasst der Schlitten einen Betätigungshebel, der an dem Schlittenkörper um eine Lagerachse drehbar gelagert ist. Die Lagerachse ist von dem Schlittenkörper, insbesondere von dem Grundkörper, umfasst. Bevorzugt ist der Betätigungshebel an der Lagerachse des Schlittenkörper derart gelagert, dass eine Drehung um die Lagerachse eine Drehung um eine Rotationsachse ist, deren Position relativ zum Schlittenkörper während der Drehung unverändert festgelegt ist. Die Rotationsachse definiert das Zentrum, um das die Drehung erfolgt. Betätigungshebel und Betätigungsarm des Schlittens sind dergestalt zueinander korrespondierend ausgebildet, dass der Betätigungsarm ausgehend von dem Betriebszustand durch Drehen des Betätigungshebels um die Lagerachse mittels des Betätigungshebels verschiebbar ist zum Ermöglichen des erläuterten Öffnens der Führungsaufnahme. Durch die korrespondierende Ausgestaltung von Betätigungshebel und Betätigungsarm ist somit gewährleistet, dass das erläuterte Verschieben des Betätigungsarms zum Ermöglichen des erläuterten Öffnens der ersten Führungsaufnahme durch Drehen des Betätigungshebels realisierbar ist. Im Rahmen der Erfindung wurde festgestellt, dass durch das Vorsehen eines solchen Betätigungshebels, der in seiner Position relativ zum Schlittenkörper durch die Lagerung an der Lagerachse des Schlittenkörpers festgelegt ist, ein besonders einfaches und reproduzierbares Verschieben des Betätigungsarms ausgehend von dem Betriebszustand zum Erreichen des Montagezustands ermöglicht ist. Bevorzugt ist der Betätigungshebel dergestalt an der Lagerachse gelagert, dass seine Position relativ zum Schlittenkörper dergestalt festgelegt ist, dass er ausgehend vom Betriebszustand nur durch eine Drehung um die Lagerachse relativ zum Schlittenkörper bewegbar ist. Der Betätigungshebel weist bevorzugt einen Betätigungsabschnitt auf, mit dem er zum Realisieren des Verschiebens des Betätigungsarms an dem Betätigungsarm anliegt, während er zum erläuterten Verschieben des Betätigungsarms um die Lagerachse des Schlittenkörpers gedreht wird. Bevorzugt liegt der Betätigungshebel über einen Lagerungsabschnitt an der Lagerachse des Schlittenkörpers an, wobei der Betätigungsabschnitt senkrecht zur Lagerachse bzw. senkrecht zur oben erläuterten Rotationsachse von dem Lagerungsabschnitt beabstandet ist. Bevorzugt ist der Betätigungshebel dergestalt an der Lagerachse des Schlittenkörper gelagert, dass eine Drehung des Betätigungshebels um die Lagerachse zwingend mit einer Bewegung des Betätigungsabschnitts relativ zum Schlittenkörper in der oben erläuterten Verschieberichtung einhergeht.

In einer Ausführungsform weist der Betätigungsarm eine Betätigungskontur auf und weist der Betätigungshebel einen zu der Betätigungskontur korrespondierenden Betätigungsabschnitt auf. Der Betätigungsabschnitt kann die oben erläuterten Eigenschaften aufweisen. Durch Drehen des Betätigungshebels um die Lagerachse ist der Betätigungsabschnitt an der Betätigungskontur entlang bewegbar. Bevorzugt gleitet der Betätigungsabschnitt während der Drehung des Betätigungshebels, durch die das Verschieben des Betätigungsarms zum Öffnen der Führungsaufnahme realisiert wird, an der Betätigungskontur anliegend an dieser entlang, insbesondere unter Ausübung einer Verschiebekraft auf die Betätigungskontur in Verschieberichtung. Bevorzugt liegt der Betätigungsabschnitt bei zum Entnehmen des zugeordneten ersten Führungsabschnitts geöffneter erster Führungsaufnahme an einem ersten Konturabschnitt der Betätigungskontur an. Somit liegt der Betätigungsabschnitt in dem oben erläuterten Montagezustand an dem ersten Konturabschnitt der Betätigungskontur an. Besonders bevorzugt liegt der Betätigungsabschnitt bei zum Entnehmen des zugeordneten ersten Führungsabschnitt geöffneter erster Führungsaufnahme bzw. im Montagezustand mit dem ersten Konturabschnitt verrastet an dem ersten Konturabschnitt an. Alternativ oder ergänzend kann auch eine anderweitige Verrastung zwischen dem Betätigungshebel und dem Schlittenkörper und/oder dem Betätigungsarm im Montagezustand bzw. bei zum Entnehmen des zugeordneten ersten Führungsabschnitts geöffneter erster Führungsaufnahme vorgesehen sein. Die Verrastung ist dergestalt ausgebildet, dass bei Vorliegen der Verrastung ein Drehen des Betätigungshebels um die Lagerachse nur bei Überschreitung einer Lösekraft ermöglicht ist, wobei nach Überschreiten der Lösekraft der Betätigungshebel mit einer Verdrehkraft um die Lagerachse drehbar ist, die kleiner als die Lösekraft ist. Das Vorsehen einer solchen Verrastung hat sich als besonders vorteilhaft herausgestellt, da der Schlitten hierdurch dauerhaft in seinem Montagezustand verbleiben kann, nachdem er einmal in den Montagezustand gebracht worden ist. Somit kann der Schlitten besonders komfortabel wie oben erläutert auf die Schiene aufgeclipst werden. Nach dem Aufclipsen ist sodann durch Aufbringen der Lösekraft unter Aufhebung der Verrastung der Betriebszustand herstellbar, in dem der Schlitten wie erläutert relativ zur Schiene längsverschieblich gehalten ist. In einer anderen Ausführungsform ist, anstatt dass wie vorgenannt beschrieben der Betätigungsabschnitt bei zum Entnehmen des zugeordneten ersten Führungsabschnitt geöffneter erster Führungsaufnahme bzw. im Montagezustand mit dem ersten Konturabschnitt mit einer solchen Verrastung verrastet an dem ersten Konturabschnitt anliegt, dass bei Vorliegen der Verrastung ein Drehen des Betätigungshebels um die Lagerachse nur bei Überschreitung einer Lösekraft ermöglicht ist, vorgesehen, dass der Betätigungsabschnitt bei zum Entnehmen des zugeordneten ersten Führungsabschnitt geöffneter erster Führungsaufnahme bzw. im Montagezustand dergestalt an dem ersten Konturabschnitt anliegt, dass eine insbesondere von der vorliegend erläuterten Federeinrichtung aufgebrachte Rückstellkraft von dem Betätigungsarm auf den Betätigungsabschnitt einwirkt. Die Rückstellkraft ist dabei so auf den Betätigungsabschnitt ausgeübt, dass sie auf eine Bewegung des Betätigungsabschnitts ausgehend von dem Montagezustand bzw. bei zum Entnehmen des zugeordneten ersten Führungsabschnitt geöffneter erster Führungsaufnahme zum Erreichen des Betriebszustands hin wirkt, insbesondere auf eine Drehung des Betätigungshebels entgegen der Drehrichtung hin wirkt, in der der Betätigungshebel ausgehend von dem Betriebszustand in den Montagezustand zu bringen ist. Diese Ausführungsform bringt den besonderen Vorteil mit sich, dass der Betätigungshebel nur durch eine extern auf ihn einwirkende Kraft ausgehend von dem Betriebszustand in den Montagezustand bringbar ist und nur bei zumindest teilweiser Aufrechterhaltung dieser Kraft in dem Montagezustand verbleibt, so dass er ohne Einwirken einer externen Kraft ausgehend von dem Montagezustand bzw. bei zum Entnehmen des zugeordneten ersten Führungsabschnitt geöffneter erster Führungsaufnahme selbsttätig eine Bewegung durchführt, durch die der Schlitten in seinen Zustand, den er in dem Betriebszustand des Gleitlagers hat, wechselt. Somit wird der Zustand des Schlittens, d.h. die relative Anordnung der Komponenten des Schlittens, den er im Montagezustand innehat, nur bewusst durch Aufbringen der hierzu erforderlichen externen Kraft beibehalten. In einer Ausführungsform weist die Betätigungskontur einen zweiten Konturabschnitt auf, an dem der Betätigungsabschnitt in dem Betriebszustand anliegt. Besonders bevorzugt ist in dem Betriebszustand der Betätigungsabschnitt mit dem zweiten Konturabschnitt verrastet an dem zweiten Konturabschnitt anliegend gehalten, und wie zur Verrastung oben erläutert kann alternativ oder ergänzend hierzu eine anderweitige Verrastung zwischen Betätigungshebel und Betätigungsarm und/oder Schlittenkörper vorgesehen sein, die nur durch eine dieser Verrastung zugeordnete Lösekraft wie oben erläutert aufgehoben werden kann. Durch eine solche Verrastung kann eine zuverlässige Fixierung des Betätigungshebels relativ zum Betätigungsarm bzw. relativ zum Schlittenkörper im Betriebszustand sichergestellt sein, wodurch eine zuverlässige Funktion das Gleitlagers im Betriebszustand sichergestellt sein kann. Allgemein bevorzugt ist der zweite Konturabschnitt in Verschieberichtung versetzt zum ersten Konturabschnitt angeordnet, insbesondere ist im Betriebszustand der zweite Konturabschnitt in Verschieberichtung weniger weit von dem ersten Führungsabschnitt entfernt als der erste Konturabschnitt.

In einer Ausführungsform weist der Betätigungshebel einen Klemmabschnitt auf, wobei der Betätigungshebel in dem Betriebszustand von der Schiene beabstandet ist und ausgehend von dem Betriebszustand um die Lagerachse drehbar ist unter Realisierung eines weiteren Betriebszustands, in dem jeder der Führungsabschnitte, wie zum Betriebszustand erläutert, in der ihm zugeordneten Führungsaufnahme angeordnet und von ihr senkrecht zur Längsrichtung umgriffen ist, wobei in dem weiteren Betriebszustand der Klemmabschnitt des Betätigungshebels in Pressanlage an der Schiene anliegt. In dem weiteren Betriebszustand können Schiene und Schlitten grundsätzlich so zueinander angeordnet sein, wie dies zum Betriebszustand vorliegend erläutert ist, jedoch unterscheidet sich der weitere Betriebszustand von dem Betriebszustand jedenfalls dadurch, dass anders als im Betriebszustand der Betätigungshebel im weiteren Betriebszustand mit dem Klemmabschnitt in Pressanlage an der Schiene anliegt, insbesondere an dem ersten Führungsabschnitt der Schiene anliegt. In dem weiteren Betriebszustand ist somit ein Entlanggleiten des Schlittens an der Schiene in Längsrichtung durch die Pressanlage des Klemmabschnitts an der Schiene gehemmt. Somit ist bei der erläuterten besonders bevorzugten Ausführungsform durch die Anlage des Klemmabschnitts an der Schiene eine Bremswirkung zwischen Schiene und Schlitten erzeugt. Besonders bevorzugt ist der Klemmabschnitt aus Kunststoff ausgebildet. Besonders bevorzugt ist der Klemmabschnitt aus einem solchen Kunststoff ausgebildet, der bei Anlage an dem ersten Führungsabschnitt der Schiene mit einer Anlagekraft einen höheren Reibwiderstand ausbildet als der Gleitwerkstoff, aus dem das unten näher erläuterte Gleitelement ausgebildet ist. Besonders bevorzugt ist der Klemmabschnitt abgerundet, sodass vermieden ist, dass durch die Pressanlage ein Verkratzen der Schiene erfolgt. Besonders bevorzugt ist in dem weiteren Betriebszustand der Betätigungshebel in einer fixierten Drehposition um die Lagerachse relativ zum Schlittenkörper fixiert gehalten. Dieses fixierte Halten in der fixierten Drehposition kann beispielsweise durch eine Verrastung zwischen Betätigungshebel und Schlittenkörper, Betätigungsarm oder Schiene realisiert sein oder durch korrespondierende Ausgestaltung der Flächen von Klemmabschnitt und Schiene, mit der diese in der Pressanlage aneinander anliegen. Das fixierte Halten bzw. die fixierte Drehposition ist somit bevorzugt nur durch Erzeugung einer zugeordneten Lösekraft auflösbar, mit der ein Drehen des Betätigungshebels um die Lagerachse ausgehend von dem weiteren Betriebszustand erst ermöglicht wird, wobei nach Verlassen des weiteren Betriebszustands, d. h. nach Auflösen des genannten fixierten Haltens bzw. der fixierten Drehposition, der Betätigungshebel mit einer Verdrehkraft um die Lagerachse verdrehbar ist, die geringer als die zugeordnete Lösekraft ist. In einer Ausführungsform ist ausgehend von dem Betriebszustand der weitere Betriebszustand nur durch Drehen des Betätigungshebels in einer definierten Drehrichtung um die Lagerachse erreichbar und ist ausgehend von dem weiteren Betriebszustand der Betriebszustand nur durch Drehen des Betätigungshebels entgegen der definierten Drehrichtung um die Lagerachse erreichbar. In einer Ausführungsform liegt der Betätigungsabschnitt des Betätigungshebels in dem weiteren Betriebszustand an einem dritten Konturabschnitt der Betätigungskontur an, in einer anderen Ausführungsform ist der Betätigungsabschnitt in dem weiteren Betriebszustand von der Betätigungskontur beabstandet. Allgemein bevorzugt ist der Betätigungsabschnitt in dem weiteren Betriebszustand entweder von dem dritten Konturabschnitt beabstandet oder liegt an dem dritten Konturabschnitt mit einer Anlagekraft an, die geringer ist als die Presskraft, mit der der Klemmabschnitt an der Schiene zur Erzeugung der Pressanlage anliegt, wobei der Betrag der Anlagekraft bevorzugt weniger als 50 %, insbesondere weniger als 20 % des Betrags der Presskraft beträgt. Allgemein vorteilhaft weist die Betätigungskontur einen dritten Konturabschnitt auf, wobei der Betätigungsabschnitt in dem weiteren Betriebszustand entlang des dritten Konturabschnitts angeordnet ist. Der Betätigungsabschnitt erstreckt sich im weiteren Betriebszustand somit ausschließlich innerhalb eines Abschnitts, insbesondere bezogen auf die Längsrichtung, über den hinweg sich der dritte Konturabschnitt erstreckt, wohingegen sich der Betätigungsabschnitt in dem Betriebszustand ausschließlich innerhalb eines Abschnitts erstreckt, insbesondere bezogen auf die Längsrichtung, über den hinweg sich der zweite Konturabschnitt erstreckt, und wobei sich der Betätigungsabschnitt bei zum Entnehmen des zugeordneten ersten Führungsabschnitts geöffneter erster Führungsaufnahme bzw. im Montagezustand ausschließlich innerhalb eines Abschnitts, insbesondere bezogen auf die Längsrichtung, erstreckt, über den hinweg sich der erste Konturabschnitt erstreckt. Allgemein bevorzugt sind erster, zweiter und dritter Konturabschnitt in Längsrichtung versetzt zueinander angeordnet. Besonders bevorzugt ist der zweite Konturabschnitt zwischen dem ersten und dem dritten Konturabschnitt angeordnet, insbesondere in Längsrichtung zwischen dem ersten und dem dritten Konturabschnitt angeordnet.

In einer Ausführungsform weist der Betätigungshebel im Betriebszustand mit einer Seite in einer Richtung senkrecht zur Längsrichtung zur Schiene. Diese senkrecht zur Längsrichtung zur Schiene weisende Seite des Betätigungshebels weist eine Erstreckung in Längsrichtung auf. Die Lagerachse ist bevorzugt bezogen auf diese Erstreckungslänge der genannten Seite des Betätigungshebels in Längsrichtung außermittig angeordnet. Dies kann den besonderen Vorteil mit sich bringen, dass je nach Drehrichtung um die Lagerachse ein jeweils anderer Zustand das Gleitlagers realisierbar ist. Bevorzugt ist der Klemmabschnitt des Betätigungshebels an einem Längsende der genannten, zur Schiene weisenden Seite des Betätigungshebels angeordnet. Besonders bevorzugt ist der Klemmabschnitt an einem solchen Längsende dieser Seite des Betätigungshebels ausgebildet, das im Betriebszustand in Längsrichtung weiter von der Lagerachse bzw. der oben erläuterten Rotationsachse und somit dem Drehzentrum entfernt ist als das ihm gegenüberliegende Längsende dieser Seite des Betätigungshebels.

Allgemein bevorzugt umschließt die erste Führungsaufnahme den ersten Führungsabschnitt über einen größeren Winkelbereich hinweg als die zweite Führungsaufnahme den zweiten Führungsabschnitt. Hierdurch kann eine einfache Entnehmbarkeit des zweiten Führungsabschnitts aus der zweiten Führungsaufnahme ermöglicht sein, wenn der erste Führungsabschnitt aus der ersten Führungsaufnahme entnommen ist. Bevorzugt erstrecken sich beide Winkelbereiche jeweils über mindestens 170° um die Führungsachse des jeweiligen Führungsabschnitts. Bevorzugt erstreckt sich der Winkelbereich, mit dem die erste Führungsaufnahme den ersten Führungsabschnitt umschließt, über mindestens 200°, insbesondere mindestens 220°, insbesondere mindestens 240°. Das Umschließen kann, muss nicht zwingend über den Winkelbereich hinweg ununterbrochen sein, jedoch ist über den Winkelbereich hinweg ein Umgreifen sichergestellt, so dass die Führungsaufnahme über den Winkelbereich hinweg eine Bewegungsbegrenzung für den zugeordneten Führungsabschnitt ausbildet und zumindest an den Enden des Winkelbereichs ist die Führungsaufnahme materiell ausgebildet.

In einer Ausführungsform ist die erste Führungsaufnahme durch einen von dem Betätigungsarm ausgebildeten ersten Aufnahmeteil und einen vom dem Schlittenkörper ausgebildeten zweiten Aufnahmeteil ausgebildet. Bevorzugt verläuft der erste Aufnahmeteil an einer ersten transversalen Seite des ersten Führungsabschnitts und der zweite Aufnahmeteil an einer zweiten transversalen Seite des ersten Führungsabschnitts, wobei die transversalen Seiten jeweils entlang der Transversalrichtung weisen, bevorzugt in entgegengesetzte Richtung entlang der Transversalrichtung. Bevorzugt verläuft der erste Aufnahmeteil ausschließlich an der ersten transversalen Seite. Allgemein bevorzugt verlaufen der erste und der zweite Aufnahmeteil in einem selben Überlappungsbereich an einer Seite der ersten Führungsaufnahme. Hierdurch kann eine besonders gute Führung von Betätigungsarm und Schlittenkörper zueinander gewährleistet sein. Allgemein bevorzugt weist zur verbesserten Führung der erste Aufnahmeteil eine erste Aussparung auf, in der ein Längsabschnitt des zweiten Aufnahmeteils verläuft, wobei bevorzugt die Aussparung und der Längsabschnitt in dem genannten Überlappungsbereich liegen. Bevorzugt ist der Längsabschnitt des zweiten Aufnahmeteils in der Aussparung des ersten Aufnahmeteils im Verlauf der genannten Verschiebung des Betätigungsarms relativ zum Schlittenkörper unter gleitender Anlage an dem die Aussparung umgebenden Bereich des ersten Aufnahmeteils verschiebblich gelagert.

In einer Ausführungsform ist in jeder Führungsaufnahme jeweils ein Gleitelement angeordnet, das einen Gleitabschnitt der Führungsaufnahme ausbildet, an dem im Betriebszustand der jeweils zugeordnete Führungsabschnitt bei einer Längsverschiebung des Schlittens relativ zur Schiene in gleitender Anlage anliegt. Das Gleitelement kann beispielsweise nach Art eines Abschnitts eines Hohlzylinders ausgebildet sein, der mit seiner Außenseite an einer Innenseite der jeweiligen Führungsaufnahme anliegt und mit seiner Innenseite im Betriebszustand zum zugeordneten Führungsabschnitt weist und an diesem gleitend anliegt. Das Vorsehen und Ausbilden solcher Gleitelemente ist im Stand der Technik hinlänglich bekannt. Bevorzugt sind solche Gleitelemente aus einem Gleitwerkstoff gefertigt. Als Gleitwerkstoff kommt vorteilhaft ein Gleitkunststoff zur Anwendung. Hierunter ist vorliegend ein polymerer Werkstoff zu verstehen, der einen geringeren Reibungskoeffizienten zur Oberfläche des Führungsabschnitts als das Material des Schlittenkörpers hat. Insbesondere zählen dazu die Thermoplaste Polyethen, Polypropylen, Polyacetal, Polycarbonat, Polyamid, Polyvinylchlorid, Polytetrafluorethen sowie bei den Duroplasten Phenolharze. Zur weiteren Verminderung der Reibung können diese Kunststoffe Schmiermittel, insbesondere feinteilige Feststoffschmiermittel wie Molybdändisulfid oder Graphit, enthalten. Solche Polymere werden auch als Tribopolymere bezeichnet. Da mit der Reibung auch der Verschleiß und auch der Abrieb geringer wird, sind diese Produkte besonders angebracht, wenn es auf hohe Reinheit ankommt, wie beispielsweise in der Lebensmittel- und Halbleiterindustrie, sowie bei biochemischen und mikrobiologischen Anwendungen. Die polymeren Werkstoffe können ferner Füllstoffe und Faserstoffe, zum Beispiel aus Kunststoff oder Textil, zur Verbesserung der mechanischen Eigenschaften enthalten. Besonders bevorzugt umschließt das in der zweiten Führungsaufnahme angeordnete Gleitelement im Betriebszustand den zweiten Führungsabschnitt über einen größeren Winkelbereich hinweg als das in der ersten Führungsaufnahme angeordnete Gleitelement den ersten Führungsabschnitt umschließt. Bevorzugt beträgt der Winkelbereich, mit dem das Gleitelement in der zweiten Führungsaufnahme den zweiten Führungsabschnitt umschließt, mindestens 140°, insbesondere mindestens 160°, wohingegen der Winkelbereich, mit dem das Gleitelement in der ersten Führungsaufnahme den ersten Führungsabschnitt umschließt, weniger als 160°, insbesondere weniger als 140° beträgt. Besonders bevorzugt ist das in der ersten Führungsaufnahme angeordnete Gleitelement ausschließlich am von dem Schlittenkörper ausgebildeten zweiten Aufnahmeteil fixiert angeordnet und erstreckt sich bevorzugt auch ausschließlich entlang dieses zweiten Aufnahmeteils. Besonders bevorzugt ist der erste Aufnahmeteil, der von dem Betätigungsarm ausgebildet ist, aus einem Gleitwerkstoff hergestellt. Bevorzugt ist der Betätigungsarm insgesamt, insbesondere integral einstückig, aus einem Gleitwerkstoff hergestellt. Besonders bevorzugt grenzt in dem Betriebszustand der Betätigungsarm mit dem ersten Aufnahmeteil unmittelbar an den ersten Führungsabschnitt an, wohingegen zwischen dem zweiten Aufnahmeteil und dem ersten Führungsabschnitt das Gleitelement angeordnet ist. Bevorzugt weist der erste Aufnahmeteil an seiner zum ersten Führungsabschnitt gewandten Seite eine Kontur auf, die der zu ihm gewandten Außenkontur des ersten Führungsabschnitts entspricht.

In einer Ausführungsform unterscheiden sich der erste Aufnahmeteil und der zweite Aufnahmeteil um weniger als 50 % ihrer Längserstreckung, wobei die Angabe "50 %" sich auf die Längserstreckung des zweiten Aufnahmeteils bezieht. Hierdurch kann eine gleichmäßige Führung des ersten Führungsabschnitts in der ersten Führungsaufnahme gewährleistet sein. Bevorzugt unterscheidet sich die Längserstreckung der ersten Führungsaufnahme, die durch die sich aus den beiden Aufnahmeteilen ergebende Längserstreckung gebildet ist, von der Längserstreckung der zweiten Führungsaufnahme um weniger als 50 %, wobei sich die Angabe "50 %" auf die Längserstreckung der ersten Führungsaufnahme bezieht. Bevorzugt beträgt der Unterschied der jeweiligen Längserstreckungen weniger als 30 %, insbesondere weniger als 20 % der jeweiligen Längserstreckung, auf die Bezug genommen ist.

In einer Ausführungsform mündet in zumindest eine der Führungsaufnahmen eine Queraussprung, wobei das in der Führungsaufnahme angeordnete Gleitelement sich in die Queraussparung erstreckt unter Festlegung einer Position des Gleitelements relativ zum Schlittenkörper. Die Queraussparung ist somit eine an einer im Betriebszustand zum Führungsabschnitt gewandten Innenseite der Führungsaufnahme vorgesehene Aussparung und somit ein Rücksprung im Vergleich zu ihn umgebenden Abschnitten der jeweiligen Führungsaufnahme. Indem sich das in der Führungsaufnahme angeordnete Gleitelement in die Queraussparung hinein erstreckt, kann eine Festlegung des Gleitelements in jegliche Richtung in der Führungsaufnahme gewährleistet sein, nämlich sowohl in Längsrichtung als auch in auf der Längsrichtung senkrecht stehenden Richtung. Bevorzugt ist das Gleitelement elastisch deformierbar ausgebildet, wobei es nur durch elastische Deformation in die Führungsaufnahme einbringbar und wieder aus ihr entfernbar ist und im erläuterten Betriebszustand und Montagezustand des Gleitlagers mit einem Vorsprung in die Queraussparung eingreifend angeordnet ist. Allgemein bevorzugt weist das Gleitelement entlang der Längsrichtung verlaufende Rippen auf, die den Gleitabschnitt des Gleitelements ausbilden, mit dem das Gleitelement im Betriebszustand in gleitender Anlage an dem zugeordneten Führungsabschnitt anliegt. Zwischen den Rippen können in Längsrichtung verlaufende Kanäle ausgebildet sein. Durch das Vorsehen der Rippen kann eine besonders vorteilhafte, reibungsarme und den Einfluss von Verunreinigungen vermeidende Anlage des Gleitelements an den Führungsabschnitt gewährleistet sein.

Allgemein bevorzugt ist die Schiene aus einem Metall hergestellt, beispielsweise als Strangpressprofil, beispielsweise aus Aluminium. Allgemein bevorzugt ist der Schlitten zumindest teilweise aus einem Metall, insbesondere aus Aluminium, und/oder aus einem Kunststoff hergestellt. In einer Ausführungsform ist zumindest des Grundkörpers des Schlittenkörpers, insbesondere der Grundkörper und der Befestigungskörper des Schlittenkörpers, insbesondere der gesamte Schlittenkörper aus einem Kunststoff oder aus einem Metall, insbesondere Aluminium, hergestellt. In einer Ausführungsform ist der Betätigungsarm aus einem Metall, insbesondere Aluminium, oder Kunststoff hergestellt. Besonders bevorzugt sind der Grundkörper des Schlittenkörpers, insbesondere der gesamte Schlittenkörper, und der Betätigungsarm aus einem selben Material hergestellt. In einer Ausführungsform ist der Betätigungshebel aus einem Metall, insbesondere Aluminium, oder Kunststoff hergestellt. In einer Ausführungsform sind der Grundkörper des Schlittenkörpers, insbesondere der gesamte Schlittenkörper, der Betätigungsarm und der Betätigungshebel aus einem selben Material hergestellt.

Die Erfindung betrifft ferner einen Schlitten für eine erfindungsgemäße Gleitlageranordnung. Der Schlitten weist eine erste und eine zweite Führungsaufnahme auf, die jeweils in Längsrichtung langgestreckt ausgebildet sind und nebeneinander verlaufen und die jeweils dazu ausgebildet sind, einen ihnen jeweils zugeordneten Führungsabschnitt einer Schiene diesen umgreifend aufzunehmen und dadurch den Schlitten längsverschiebbar an der Schiene festzulegen. Der Schlitten weist einen Schlittenkörper und einen Betätigungsarm auf, die gemeinsam eine erste der Führungsaufnahmen ausbilden. Der Betätigungsarm ist an dem Schlittenkörper zu diesem senkrecht zur Längsrichtung verschiebbar geführt fixiert zum Ermöglichen eines Öffnens der ersten Führungsaufnahme durch Verschieben des Betätigungsarms zum Entnehmen des zugeordneten ersten Führungsabschnitts aus der ersten Führungsaufnahme und/oder zum Einführen des zugeordneten ersten Führungsabschnitts in die erste Führungsaufnahme entlang einer senkrecht zur Längsrichtung verlaufenden Entnahmerichtung.

Die Erfindung betrifft ferner die Verwendung eines erfindungsgemäßen Gleitlagers. Bei der erfindungsgemäßen Verwendung wird der Schlitten auf der Schiene längsverschieblich befestigt, indem zuerst der zweite Führungsabschnitt der Schiene in der zweiten Führungsaufnahme des Schlittens angeordnet wird und anschließend der erste Führungsabschnitt der Schiene in der ersten Führungsaufnahme des Schlittens angeordnet wird. Dabei werden die Führungsabschnitte jeweils senkrecht zur Längsrichtung in die ihnen jeweils zugeordnete Führungsaufnahme eingeführt und wird der Betätigungsarm des Schlittens ausgehend von einer Ruhelage in einer senkrecht zur Längsrichtung verlaufenden Verschieberichtung bewegt, wobei die erste Führungsaufnahme so weit geöffnet wird, dass der erste Führungsabschnitt der Schiene in die erste Führungsaufnahme senkrecht zur Längsrichtung einführbar ist. Nach Anordnung beider Führungsabschnitte in der ihnen jeweils zugeordneten Führungsaufnahme wird der Betätigungsarm entgegen der Verschieberichtung bewegt unter Festlegung des Schlittens relativ zur Schiene senkrecht zur Längsrichtung.

Das erfindungsgemäße Gleitlager, der erfindungsgemäße Schlitten und die erfindungsgemäße Verwendung können jeweils Merkmale aufweisen, die im Zusammenhang mit gattungsgemäßen Gleitlagern erläutert sind. Ferner können verschiedenen erfindungsgemäße Ausführungsformen jeweils Merkmale aufweisen, die im Zusammenhang mit anderen erfindungsgemäßen Ausführungsformen erläutert sind.

Die Erfindung wird nachfolgend unter Bezugnahme auf drei Figuren anhand eines Ausführungsbeispiels näher erläutert.

Es zeigen:
- Figur 1:: in schematischen Prinzipdarstellungen eine Ausführungsform eines erfindungsgemäßen Gleitlagers in verschiedenen Zuständen;
- Figur 2:: in verschiedenen schematischen Prinzipdarstellungen Ansichten der Ausführungsform gemäß Figur 1 im Betriebszustand;
- Figur 3:: in verschiedenen schematischen Prinzipdarstellungen verschiedene Ansichten der Ausführungsform gemäß Figur 1 in dem Montagezustand;
- Figur 4:: in verschiedenen schematischen Prinzipdarstellungen eine weitere Ausführungsform eines erfindungsgemäßen Gleitlagers in verschiedenen Zuständen;
- Figur 5:: in verschiedenen schematischen Prinzipdarstellungen verschiedene Ansichten auf verschiedene Bestandteile der Ausführungsform gemäß Figur 4.

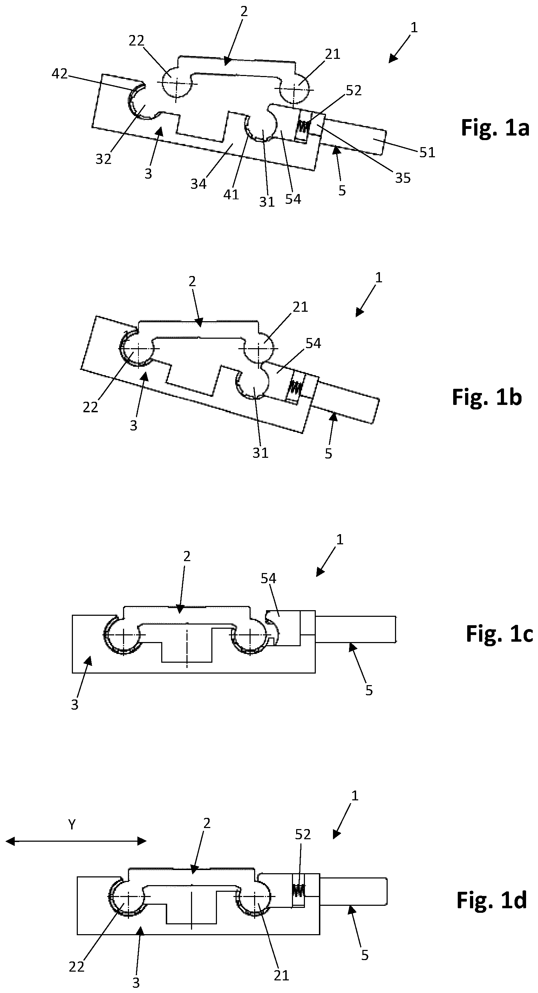

- In Figur 1: umfassend die Figuren 1a, 1b, 1c und 1d ist eine

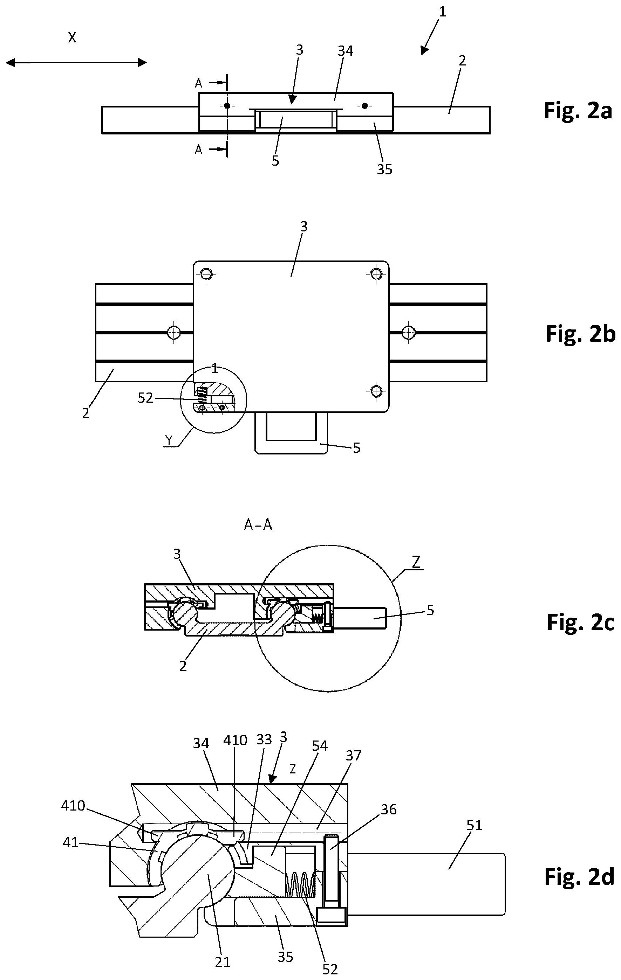

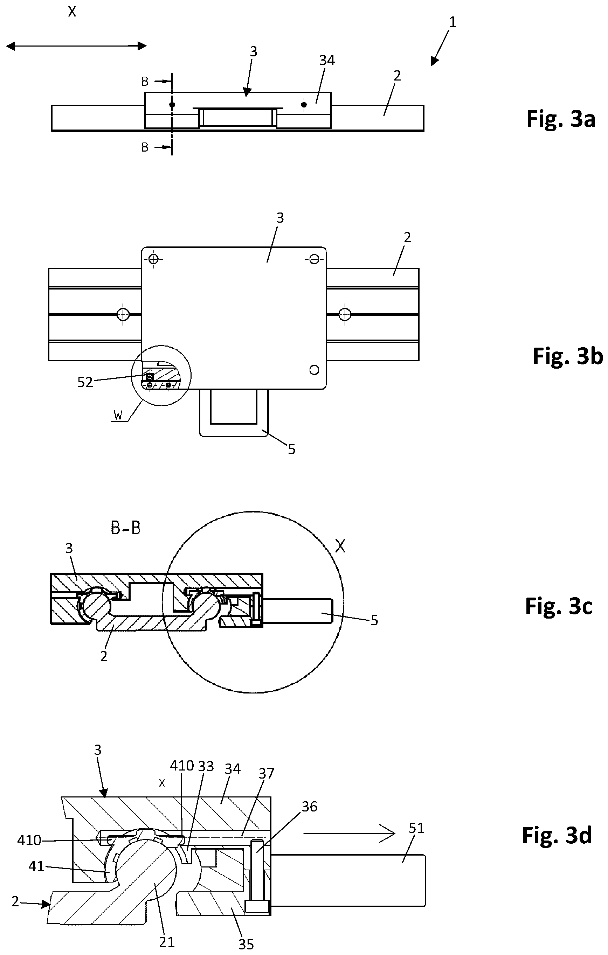

Ausführungsform eines erfindungsgemäßen Gleitlagers 1 in verschiedenen Zuständen dargestellt. Das Gleitlager 1 umfasst eine Schiene 2 und einen Schlitten **3.** Die Schiene 2 umfasst zwei in einer Längsrichtung X langgestreckt verlaufende Führungsabschnitte 21, 22, die jeweils zylinderartig ausgestaltet sind. In Figur 1 sind die Führungsachsen der Führungsabschnitte 21, 22 durch Kreuze angedeutet. Die beiden Führungsabschnitte 21, 22 verlaufen in einer Transversalrichtung Y, die senkrecht zur Längsrichtung X verläuft, nebeneinander und sind voneinander in der Transversalrichtung Y beabstandet. Die Transversalrichtung Y ist in Figur 1d von Figur 1 eingezeichnet, da in Figur 1d der Betriebszustand des Gleitlagers 1 gezeigt ist, in dem der Schlitten 3 relativ zur Schiene 2 senkrecht zur Längsrichtung X und somit auch bezogen auf die Transversalrichtung Y positionsfest fixiert gehalten ist, so dass die Transversalrichtung Y für Schiene 2 und Schlitten 3 gleichermaßen festgelegt ist. Der Schlitten 3 weist eine erste Führungsaufnahme 31 auf, die korrespondierend zu dem ersten Führungsabschnitt 21 der Schiene 2 ausgebildet ist, sowie eine zweite Führungsaufnahme 32, die zu einem zweiten Führungsabschnitt 22 der Schiene 2 korrespondierend ausgestaltet ist. Die Führungsaufnahmen 31, 32 sind jeweils nach Art eines Hohlzylinders ausgebildet, der in seinem Zylindermantel die in Figur 1 für jede der Führungsaufnahmen 31, 32 gezeigte Seitenöffnung aufweist. Durch diese Seitenöffnung erstrecken sich die Stegabschnitte der Schiene 2, wie in Figur 1d gezeigt, im Betriebszustand hindurch, durch die die Führungsabschnitte 21, 22 am Schienenkörper der Schiene 2 angebunden sind. Der Schlitten 3 weist einen Schlittenkörper auf, der einen Grundkörper 34 und einen Befestigungskörper 35 umfasst. Wie insbesondere auch aus den Figuren 2 und 3 zu erkennen, ist der Befestigungskörper 35 durch Schrauben 36 an dem Grundkörper 34 befestigt. Grundkörper 34 und Befestigungskörper 35 bilden gemeinsam eine Führung für den Betätigungsarm 5 aus, der einen über den Schlittenkörper in jedem Zustand des Gleitlagers 1 vorstehenden Betätigungsgriff 51 und einen ersten Aufnahmeteil 54 auf. Der erste Aufnahmeteil 54 bildet einen Teil der ersten Führungsaufnahme 31. Die Führungsaufnahme 31 ist außerdem durch einen zweiten Aufnahmeteil ausgebildet, der von dem Grundkörper 34 des Schlittenkörpers gebildet ist. Der Betätigungsarm 5 ist vorliegend einstückig ausgebildet und aus einem Gleitwerkstoff hergestellt. In dem in Figur 1d gezeigten Betriebszustand grenzt der Betätigungsarm 5 mit dem ersten Aufnahmeteil 54 unmittelbar an den ersten Führungsabschnitt 21 der Schiene 2 an, wohingegen zwischen dem zweiten Aufnahmeteil, der von dem Grundkörper 34 ausgebildet ist, und dem ersten Führungsabschnitt 21 ein erstes Gleitelement 41 vorgesehen ist. Entsprechend ist zwischen der zweiten Führungsaufnahme 32 und dem zweiten Führungsabschnitt 22 ein zweites Gleitelement 42 vorgesehen. In dem in Figur 1d gezeigten Betriebszustand ist somit der Schlitten 3 in Längsrichtung X reibungsarm verschiebbar an der Schiene 2 geführt, während er senkrecht zur Längsrichtung X positionsfest an dieser gehalten ist. Hierzu trägt bei, dass die Führungsabschnitte 21, 22 ausschließlich über einen Gleitwerkstoff an den sie begrenzenden Wandungen der Führungsaufnahmen 31, 32 anliegen können und somit reibungsarm an diesen entlanggleiten können.

Aus der Abfolge der Figuren 1a bi 1d ist die Funktionsweise der beschriebenen Ausführungsform des erfindungsgemäßen Gleitlagers gut erkennbar. Der Betätigungsarm 5 ist relativ zum Schlittenkörper entlang einer Verschieberichtung verschiebbar gelagert. Dabei kann er sich zwischen einem ersten Anschlag, an dem er in Figur 1c anliegt, und einem zweiten Anschlag, der in Figur 1c gezeigt ist, an dem er jedoch in den Figuren 1a, 1b und 1d anliegt, entlang der Verschieberichtung relativ zum Schlittenkörper bewegen. Die Anschläge sind durch den Schlittenkörper ausgebildet. Dabei ist der zuerst genannte Anschlag von dem Befestigungskörper 35 und der weitere Anschlag 33 von dem Grundkörper 34 ausgebildet, was erfindungsgemäß allgemein vorteilhaft ist. In dem in Figur 1d gezeigten Betriebszustand liegt der Betätigungsarm 5 an dem weiteren Anschlag 33 an und ist durch die Federeinrichtung 52, die entlang der Verschieberichtung auf ihn wirkt, gegen diesen Anschlag 33 gepresst gehalten. In dem Betriebszustand ist der Schlitten 3 senkrecht zur Längsrichtung X nicht von der Schiene 2 abnehmbar. Allerdings kann der Betätigungsarm 5 entlang der Verschieberichtung relativ zum Schlittenkörper bewegt werden bis er an dem anderen Anschlag 33 anliegt, wie in Figur 1c gezeigt, wodurch die erste Führungsaufnahme 31 so weit geöffnet wird, dass der erste Führungsabschnitt 21 aus ihr herausbewegt werden kann, indem der Schlitten 2, wie aus der Zusammenschau der Figuren 1c und 1b zu erkennen, um die Führungsachse des zweiten Führungsabschnitts 22 gedreht wird. Anschließend ist der Schlitten 3, wie aus der Zusammenschau der Figuren 1b und 1a ersichtlich, von der Schiene 2 abnehmbar, indem der zweite Führungsabschnitt 22 aus der zweiten Führungsaufnahme 32 entnommen wird.

In Figur 2 umfassend die Figuren 2, 2b, 2c und 2d sind verschiedene Ansichten der Ausführungsform des Gleitlagers 1 gemäß Figur 1 im Betriebszustand dargestellt. Die Figuren 2a und 2b zeigen Aufsichten auf das Gleitlager 1 aus verschiedenen Richtungen. Figur 2c zeigt den Schnitt A - A, wie in Figur 2a eingezeichnet, und Figur 2d eine Vergrößerung dieses Schnitts. Aus Figur 2 ist zu erkennen, dass in die erste Führungsaufnahme 31 eine Querausnehmung 37 mündet, die im Grundkörper 34 vorgesehen ist und die, wie erfindungsgemäß allgemein vorteilhaft ist, als Bohrung ausgeführt ist. In diese Querausnehmung 37 greift das erste Gleitelement 41 mit Vorsprüngen 410 ein, wodurch das Gleitelement 41 sowohl entlang der Längsrichtung X als auch senkrecht zur Längsrichtung X positionsfest am Grundkörper 34 gehalten ist. Ferner ist zu erkennen, dass das erste Gleitelement 41 in Längsrichtung X verlaufende Rippen aufweist, zwischen denen Kanäle ausgebildet sind. Der von dem Betätigungsarm 5 ausgebildete erste Aufnahmeteil 54, der integral einstückig mit dem Betätigungsgriff 51 hergestellt ist, ist in dem Betriebszustand durch die Federeinrichtung 52 gegen den weiteren Anschlag 33 gepresst gehalten und liegt dabei gleichzeitig nahezu an dem ersten Führungsabschnitt 21 an, erfindungsgemäß allgemein bevorzugt ist er in dem Betriebszustand von dem ersten Führungsabschnitt 21 um weniger als 0,1 mm beabstandet.

In Figur 3 umfassend die Figuren 3a, 3b, 3c und 3d ist die Ausführungsform gemäß Figur 1 im Montagezustand dargestellt, wobei die Ansichten der Figuren 3a, 3b, 3c und 3d den Ansichten der Figuren 2a, 2b, 2c und 2d entsprechen. Aus dem Vergleich zwischen den Figuren 2 und 3 ist zu erkennen, dass ausgehend von dem Betriebszustand zum Erreichen des Montagezustands der Betätigungsarm 5 entlang der Verschieberichtung relativ zum Schlittenkörper bewegt wird, wodurch er gegen den von dem Grundkörper 35 ausgebildeten Anschlag gepresst wird. Diese Verschiebebewegung ist nur unter Überwindung der von der Federeinrichtung 52 aufgebrachten Federkraft möglich. In dem Montagezustand ist die erste Führungsaufnahme 31 so weit geöffnet, dass der erste Führungsabschnitt 21, wie in Figur 1 erläutert, aus ihr entnommen werden kann.

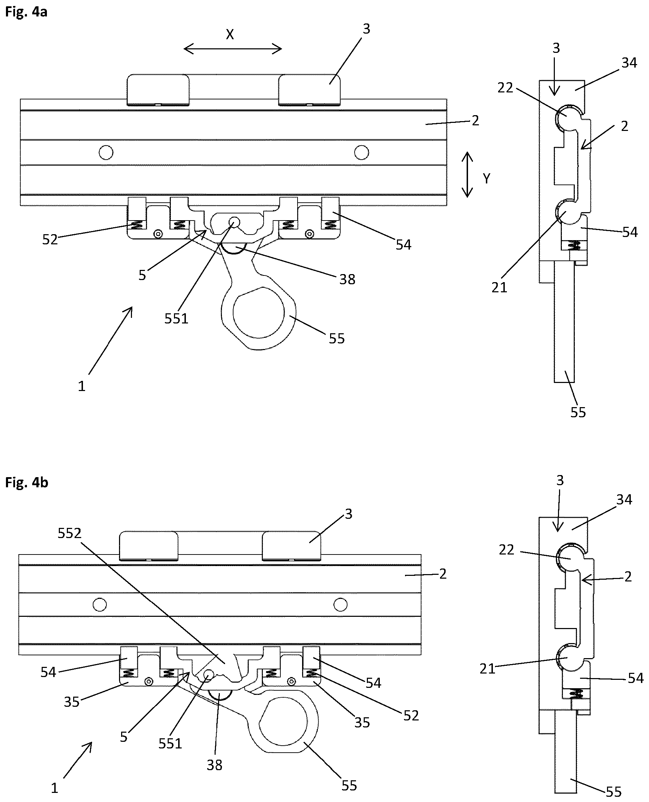

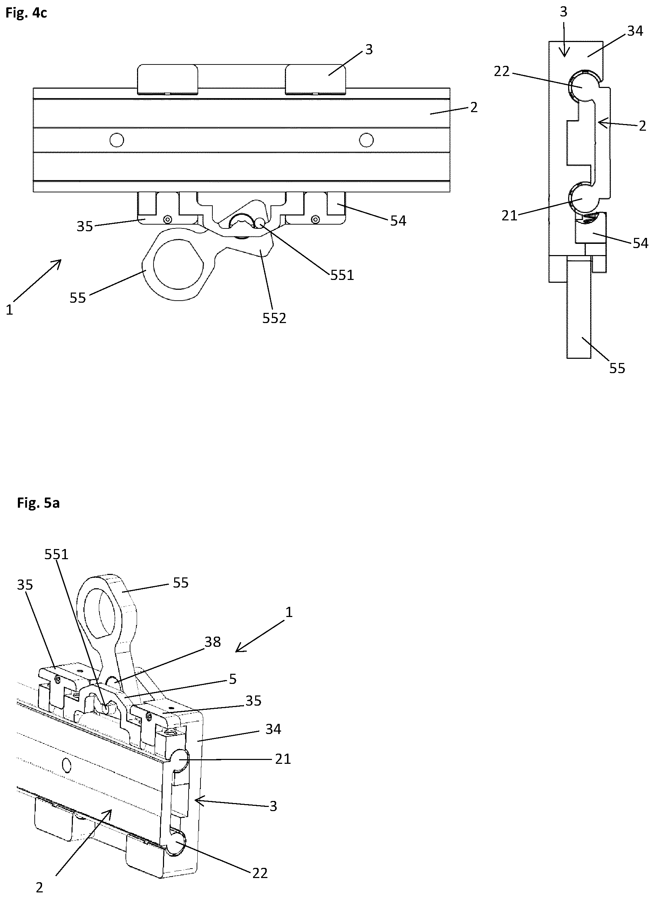

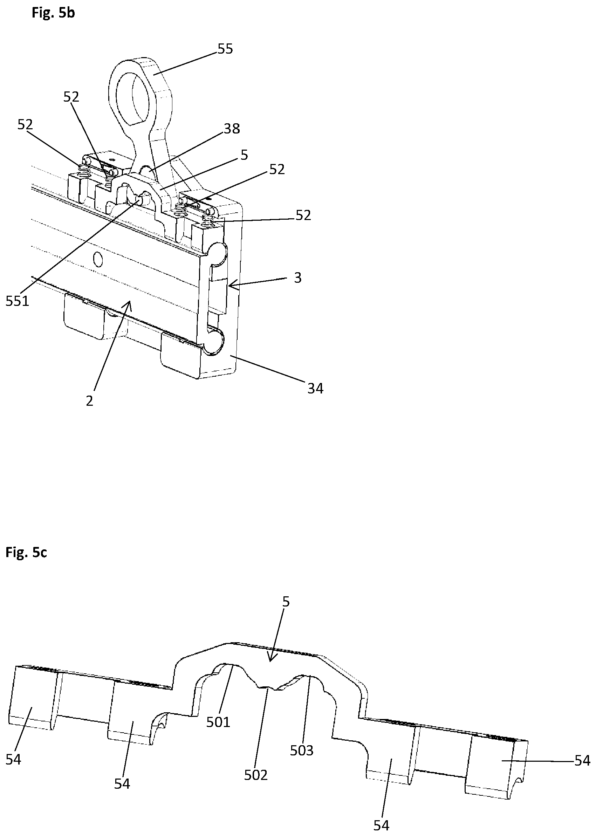

In Figur 4 umfassend die Figuren 4a, 4b und 4c sind in verschiedenen schematischen Prinzipdarstellungen Ansichten auf eine weitere Ausführungsform eines erfindungsgemäßen Gleitlagers 1 in verschiedenen Zuständen dargestellt. In Figur 4a ist das Gleitlager 1 im Betriebszustand dargestellt, in Figur 4b in einem weiteren Betriebszustand und in Figur 4c im Montagezustand. In Figur 5 umfassend die Figuren 5a, 5b und 5c sind zur Verdeutlichung der Eigenschaften des Gleitlagers 1 gemäß Figur 4 in verschiedenen schematischen Prinzipdarstellungen verschiedene Ansichten auf das Gleitlager 1 bzw. auf Bestandteile des Gleitlagers 1 gezeigt. Nachfolgend werden zur Erläuterung der in den Figuren 4 und 5 gezeigten Ausführungsform die Figuren 4 und 5 gemeinsam erläutert.

Das Gleitlager 1 gemäß den Figuren 4 und 5 umfasst eine Schiene 2, die im Wesentlichen analog zu der Schiene 2 der Ausführungsform gemäß Figur 1 ausgebildet ist. Der Schlitten 3 weist einen Schlittenkörper auf, der einen Grundkörper 34 und einen Befestigungskörper 35 umfasst, wobei vorliegend der Befestigungskörper 35 zweiteilig ausgebildet ist und somit zwei Teile umfasst, die in Längsrichtung X voneinander beabstandet sind. Der Befestigungskörper 35, **d. h.** seine sämtlichen Teile, sind durch Schrauben an dem Grundkörper 34 befestigt. Der Schlitten 3 umfasst ferner einen Betätigungsarm **5,** der durch den Befestigungskörper 35 am Grundkörper 34 verliersicher gehalten ist. Zwischen dem Betätigungsarm 5 und dem Schlittenkörper ist eine Führung vorgesehen, mittels derer der Betätigungsarm 5 an dem Schlittenkörper über einen in Transversalrichtung Y verlaufenden Verschiebeweg hinweg verschiebbar geführt fixiert ist. Die Führung ist durch einen ersten Führungsteil des Schlittenkörpers ausgebildet, der gemeinsam von dem Grundkörper 34 und dem Befestigungskörper 35 des Schlittenkörpers ausgebildet ist, und durch einen zweiten Führungsteil des Betätigungsarms 5 ausgebildet. Die Ausgestaltung der Führung ist insbesondere aus der Zusammenschau der Figuren 5a, 5b und 5c ersichtlich. Während in Figur 5a das Gleitlager 1 insgesamt gezeigt ist, ist in Figur 5b das Gleitlager 1 im Vergleich zu Figur 5a ohne den Befestigungskörper 35 gezeigt, während in Figur 5c der Betätigungsarm 5 alleine gezeigt ist. Aus der Zusammenschau dieser Figuren ist ersichtlich, dass der Betätigungsarm 5 als zweiten Führungsteil der Führung Nuten ausbildet, in die die Teile des Befestigungskörpers 35 als Federn eingreifen, wobei der Betätigungsarm 5 in seiner Position in Längsrichtung X durch das Eingreifen der Federn in die Nuten festgelegt ist und in einer senkrecht auf Längsrichtung X und Transversalrichtung Y stehenden Richtung durch das Zusammenwirken von Grundkörper 34 und Befestigungskörper 35 in seiner Position festgelegt ist und in Transversalrichtung Y relativ zum Schlittenkörper verschiebbar geführt gelagert ist. Die Führung bildet einen Anschlag und einen weiteren Anschlag aus, die die beiden Enden des Verschiebewegs ausbilden, über den hinweg der Betätigungsarm 5 in Transversalrichtung Y relativ zum Schlittenkörper in Verschieberichtung, d. h. vorliegend in Transversalrichtung Y, beweglich ist. In dem in Figur 4c gezeigten Montagezustand liegt der Betätigungsarm 5 an dem Anschlag der Führung an, in dem in Figur 4a gezeigten Betriebszustand liegt der Betätigungsarm 5 an dem weiteren Anschlag der Führung an. Vorliegend erfolgt die Anlage mittelbar über den ferner von dem Schlitten 3 umfassten Betätigungshebel 55.

Der Betätigungshebel 55, den der Schlitten 3 der in den Figuren 4 und 5 gezeigten Ausführungsform eines Gleitlagers 1 aufweist, ist an einer Lagerachse 38 des Schlittenkörpers um die Lagerachse 38 drehbar an dem Schlittenkörper gelagert. Sowohl im in Figur 4a gezeigten Betriebszustand als auch im in Figur 4b gezeigten weiteren Betriebszustand als auch im in Figur 4c gezeigten Montagezustand ist der Betätigungshebel 55 relativ zum Schlittenkörper ausschließlich durch Verdrehen um die Lagerachse 38 bewegbar und ansonsten relativ zum Schlittenkörper festgelegt, was erfindungsgemäß allgemein vorteilhaft ist. Der Betätigungshebel 55 weist einen Betätigungsabschnitt 551 auf, und der Betätigungsarm 5 weist eine Betätigungskontur mit Konturabschnitten 501, 502, 503 auf. In dem in Figur 4a gezeigten Betriebszustand ist der Betätigungshebel 55 von der Schiene 2 beabstandet. Der Betätigunghebel 55 weist eine Seite auf, die in Transversalrichtung Y zum ersten Führungsabschnitt 21 der Schiene 2 weist. Wie aus der Zusammenschau der Figuren 4a, 4b und 4c ersichtlich weist diese Seite des Betätigungshebels 55 eine Erstreckungslänge in Längsrichtung X auf, wobei die Lagerachse 38 bezogen auf die Längsrichtung X außermittig innerhalb der Erstreckungslänge angeordnet ist. Ein Längsende dieser Seite bildet dabei einen Klemmabschnitt 552 des Betätigungshebels 55 aus.

Somit werden mit dem Betätigungshebel 55 verschiedene Funktionen realisiert: In dem in Figur 4a gezeigten Betriebszustand ist der Betätigungshebel 55 mit seinem Betätigungsabschnitt 551 verrastet am zweiten Konturabschnitt 502 der Betätigungskontur des Betätigungsarms 5 fixiert gehalten. Ausgehend von dem Betriebszustand kann der Betätigungshebel 55 in eine erste Richtung um die Lagerachse 38 gedreht werden zur Realisierung des in Figur 4b gezeigten weiteren Betriebszustands. In Figur 4b schematisch angedeutet weist der Betätigungshebel 55 an seiner zur Schiene 2 gewandten Seite an dem Längsende, das den Klemmabschnitt 552 ausbildet, ein Übermaß auf, sodass der Klemmabschnitt 552 in dem weiteren Betriebszustand mit einer in Transversalrichtung Y wirkenden Presskraft in Pressanlage gegen den ersten Führungsabschnitt 21 der Schiene 2 gepresst gehalten ist. Diese Presskraft wird zwischen der Lagerachse 38 des Schlittens 3 und dem ersten Führungsabschnitt 21 der Schiene 2 durch den Betätigungshebel 55 aufgebaut, was erfindungsgemäß allgemein vorteilhaft ist. In diesem weiteren Betriebszustand erzeugt die Pressanlage des Klemmabschnitts 552 eine Hemmung einer Relativbewegung zwischen Schlitten 3 und Schiene 2 in Längsrichtung **X.** Somit kann in dem weiteren Betriebszustand der Schlitten 3 in jeglicher Hinsicht positionsfest an der Schiene 2 fixiert sein, was erfindungsgemäß allgemein vorteilhaft ist. Diese solchermaßen festgelegte Position des Schlittens 3 relativ zur Schiene 2 kann ausgehend von dem in Figur 4b gezeigten weiteren Betriebszustand nur verändert werden, wenn der Betätigungshebel in einer solchen Richtung um die Lagerachse 38 zurückgedreht wird, in der er ausgehend von dem weiteren Betriebszustand zum Erreichen des Betriebszustands zu drehen ist, oder indem eine ganz erhebliche Relativkraft zwischen Schlitten 3 und Schiene 2 in Längsrichtung erzeugt wird, die bestimmungsgemäß üblicherweise nicht vorgesehen ist. Andererseits kann der Betätigungshebel 55 dazu benutzt werden, ausgehend von dem Figur 4a gezeigten Betriebszustand den in Figur 4c gezeigten Montagezustand zu realisieren, indem er ausgehend von dem in Figur 4a gezeigten Betriebszustand um die Lagerachse 38 in entgegengesetzte Richtung gedreht wird, **d. h.** entgegengesetzt im Vergleich zu der Drehung, die zum Erreichen des weiteren Betriebszustands erforderlich ist. Bei einer solchen Drehung gleitet der Betätigungsabschnitt 551 an der Betätigungskontur des Betätigungsarms 5 entlang, wodurch eine Relativkraft zwischen Schlittenkörper und Betätigungsarm 5 in Transversalrichtung Y erzeugt wird, durch die der Betätigungsarm 5 relativ zum Schlittenkörper in Transversalrichtung Y verschoben wird, bis der in Figur 4c gezeigte Montagezustand erreicht ist. In diesem Montagezustand liegt der Betätigungsarm 5 an einem von der Führung gebildeten Anschlag an, und der Betätigungsabschnitt 551 ist an einem ersten Konturabschnitt 501 an diesem Konturabschnitt 501 gehalten, wobei der erste Konturabschnitt 501 aufgrund der Federeinrichtung 52 eine Rückstellkraft auf den Betätigungsabschnitt 551 und somit auf den Betätigungshebel 55 ausübt. Somit ist der Montagezustand gemäß Figur 4c so realisiert, dass er nur durch Aufbringung einer externen Kraft auf den Betätigungshebel 55 beibehalten werden kann, wobei bei Aufhebung dieser externen Kraft durch Einwirkung der Federeinrichtung 52 unter Drehen des Betätigungshebels 55 um die Lagerachse 38 ausgehend von dem Montagezustand selbsttätig erneut der Betriebszustand gemäß Figur 4a erreichbar ist, was erfindungsgemäß allgemein vorteilhaft ist.

### Bezugszeichenliste

- 1: Gleitlager
- 2: Schiene
- 3: Schlitten
- 5: Betätigungsarm
- 21: Führungsabschnitt
- 22: Führungsabschnitt
- 31: erste Führungsaufnahme
- 32: zweite Führungsaufnahme
- 33: Anschlag
- 34: Grundkörper
- 35: Befestigungskörper
- 36: Schraube
- 37: erste Queraussparung
- 38: Lagerachse
- 41: erstes Gleitelement
- 42: zweites Gleitelement
- 51: Betätigungsgriff
- 52: Federeinrichtung
- 54: erster Aufnahmeteil
- 55: Betätigungshebel
- 410: Vorsprung
- 501: Konturabschnitt
- 502: Konturabschnitt
- 503: Konturabschnitt
- 551: Betätigungsabschnitt
- 552: Klemmabschnitt
- X: Längsrichtung
- Y: Transversalrichtung

## Patentansprüche

1. Schlitten (3) für ein Gleitlager (1), wobei der Schlitten (3) eine erste und eine zweite Führungsaufnahme (31, 32) aufweist, die jeweils in Längsrichtung (X) langgestreckt ausgebildet sind und nebeneinander verlaufen und die jeweils dazu ausgebildet sind, in einem Betriebszustand einen ihnen jeweils zugeordneten Führungsabschnitt (21, 22) einer Schiene (2) diesen umgreifend aufzunehmen und dadurch den Schlitten (3) längsverschiebbar an der Schiene (2) festzulegen,
**dadurch gekennzeichnet, dass**
der Schlitten (3) einen Schlittenkörper und einen Betätigungsarm (5) aufweist, die gemeinsam eine erste der Führungsaufnahmen (31, 32) ausbilden, wobei der Betätigungsarm (5) an dem Schlittenkörper zu diesem senkrecht zur Längsrichtung (X) verschiebbar geführt fixiert ist zum Ermöglichen eines Öffnens der ersten Führungsaufnahme (31, 32) durch Verschieben des Betätigungsarms (5) zum Entnehmen des zugeordneten ersten Führungsabschnitts (21, 22) aus der ersten Führungsaufnahme (31, 32) oder zum Einführen des zugeordneten ersten Führungsabschnitts (21, 22) in die erste Führungsaufnahme (31, 32) entlang einer senkrecht zur Längsrichtung (X) verlaufenden Entnahmerichtung, wobei die Führung einen Anschlag ausbildet, der ein Ende des Verschiebewegs definiert, wobei der Betätigungsarm (5) ausgehend von dem Betriebszustand bis zum Erreichen des Anschlags entlang des Verschiebewegs relativ zu dem Grundkörper (34) verschiebbar ist und bei Anlage des Betätigungsarms (5) an dem Anschlag eine Öffnung der ersten Führungsaufnahme ausbildet, durch die der erste Führungsabschnitt entnehmbar ist.

2. Gleitlager (1) umfassend eine Schiene (2) und einen Schlitten (3) nach Anspruch 1, wobei die Schiene (2) zwei in einer Längsrichtung (X) langgestreckte, nebeneinander verlaufende Führungsabschnitte (21, 22) aufweist, wobei die Schiene einen Schienenkörper aufweist, wobei die Führungsabschnitte der Schiene jeweils über einen Stegabschnitt mit dem Schienenkörper verbunden sind und die Führungsaufnahmen jeweils eine in Längsrichtung durchgehende Seitenöffnung aufweisen, durch die hindurch sich im Betriebszustand die Stegabschnitte erstrecken, wobei in dem Betriebszustand jeder der Führungsabschnitte (21, 22) in der ihm zugeordneten Führungsaufnahme (31, 32) angeordnet und von ihr senkrecht zur Längsrichtung (X) umgriffen ist unter Festlegung des Schlittens (3) relativ zur Schiene (2) senkrecht zur Längsachse (X) und unter Gewährleistung einer Längsverschiebbarkeit des Schlittens (3) zur Schiene (2).

3. Gleitlager (1) nach Anspruch 2,
**dadurch gekennzeichnet, dass**
der Schlittenkörper einen Grundkörper (34) und einen Befestigungskörper (35) umfasst, die lösbar aneinander fixiert sind, wobei der Betätigungsarm nur nach einem Lösen des Grundkörpers (34) und des Befestigungskörpers (35) voneinander von dem Schlittenkörper trennbar ist.

4. Gleitlager (1) nach Anspruch 2 oder 3,
**dadurch gekennzeichnet, dass**
die Führung durch den Grundkörper (34) und den Befestigungskörper (35) gebildet ist, wobei insbesondere die Führung eine Linearführung entlang einer senkrecht zur Längsrichtung (X) verlaufenden Transversalrichtung (Y) ist.

5. Gleitlager (1) nach einem der Ansprüche 2 bis **4,**
**dadurch gekennzeichnet, dass**
bei Anlage des Betätigungsarms (5) an dem Anschlag eine Öffnung der ersten Führungsaufnahme (31) ausgebildet ist, durch die der erste Führungsabschnitt (21) entnehmbar ist, wobei die Führungsaufnahmen (21, 22) und die Führungsabschnitte (31, 32) dergestalt zueinander korrespondierend ausgebildet sind, dass nur nach dem Entnehmen des ersten Führungsabschnitts (21) aus der ersten Führungsaufnahme (31) der zweite Führungsabschnitt (22) senkrecht zur Längsrichtung aus der zweiten Führungsaufnahme (32) entnehmbar ist.

6. Gleitlager (1) nach einem der Ansprüche 2 bis **5,**
**dadurch gekennzeichnet, dass**
sich die beiden Führungsabschnitte (31, 32) jeweils entlang einer ihnen jeweils zugeordneten Führungsachse erstrecken, die in Längsrichtung (X) verläuft, wobei bei einer ausgehend von dem Betriebszustand realisierten Anlage des Betätigungsarms (5) am Anschlag der Führung der zweite Führungsabschnitt (22) in der zweiten Führungsaufnahme (32) um dessen Führungsachse verdrehbar gelagert ist und der erste Führungsabschnitt (21) durch Verdrehung des Schlittens (3) um die Führungsachse des zweiten Führungsabschnitts (22) aus der erstem Führungsaufnahme (31) entnehmbar ist.

7. Gleitlager (1) nach einem der Ansprüche 2 bis **6,**
**dadurch gekennzeichnet, dass**
die Schiene (2) einen Schienenkörper aufweist und die Führungsabschnitte (21, 22) jeweils über einen Stegabschnitt mit dem Schienenkörper verbunden sind, wobei die Führungsaufnahmen (31, 32) jeweils eine in Längsrichtung (X) durchgehende Seitenöffnung aufweisen, durch die hindurch im Betriebszustand die Stegabschnitte zu den in den Führungsaufnahmen (31, 32) angeordneten Führungsabschnitten (21, 22) verlaufen, wobei die Stegabschnitte in einer Richtung senkrecht zur Längsrichtung (X) eine geringere Breite als die Führungsabschnitte (21, 22) aufweisen, wobei die Seitenöffnung der ersten Führungsaufnahme (31, 32) im Betriebszustand eine Breite aufweist, die kleiner als die Breite des ihr zugeordneten ersten Führungsabschnitts (31) ist, wobei bei Anlage des Betätigungsarms (5) am Anschlag der Führung die Breite der Seitenöffnung zumindest die Breite des ersten Führungsabschnitts (21) beträgt.

8. Gleitlager (1) nach einem der Ansprüche 2 bis **7,**
**dadurch gekennzeichnet, dass**
die Führung eine Federeinrichtung (52) umfasst, die den Betätigungsarm (5) relativ zum Grundkörper (34) mit einer entlang des Verschiebewegs vom Anschlag weg gerichteten Federkraft beaufschlagt.

9. Gleitlager (1) nach einem der Ansprüche 2 bis 8,
**dadurch gekennzeichnet, dass**
die Führung einen weiteren Anschlag (33) aufweist, der ein dem genannten Ende gegenüberliegendes Ende des Verschiebewegs definiert.

10. Gleitlager (1) nach einem der Ansprüche 2 bis 9,
**dadurch gekennzeichnet, dass**
der Schlitten (3) einen Betätigungshebel (55) aufweist, der an dem Schlittenkörper um eine Lagerachse (38) drehbar gelagert ist, wobei der Betätigungsarm (5) ausgehend von dem Betriebszustand durch Drehen des Betätigungshebels (55) um die Lagerachse (38) mittels des Betätigungshebels (55) verschiebbar ist zum Ermöglichen des Öffnens der Führungsaufnahme (31, 32).

11. Gleitlager (1) nach Anspruch 10,
**dadurch gekennzeichnet, dass**
der Betätigungsarm (5) eine Betätigungskontur und der Betätigungshebel (55) einen zu der Betätigungskontur korrespondierenden Betätigungsabschnitt (551) aufweist, wobei durch Drehen des Betätigungshebels (55) um die Lagerachse (38) der Betätigungsabschnitt (551) an der Betätigungskontur entlang bewegbar ist, wobei der Betätigungsabschnitt (551) bei zum Entnehmen des zugeordneten ersten Führungsabschnitts (21, 22) geöffneter erster Führungsaufnahme (31, 32) an einem ersten Konturabschnitt (501) der Betätigungskontur anliegt, wobei insbesondere die Betätigungskontur einen zweiten Konturabschnitt (502) aufweist, an dem der Betätigungsabschnitt (551) in dem Betriebszustand anliegt, insbesondere mit dem zweiten Konturabschnitt (502) verrastet an diesem anliegt.

12. Gleitlager nach einem der Ansprüche 10 bis 11,
**dadurch gekennzeichnet, dass**
der Betätigungshebel (55) einen Klemmabschnitt (552) aufweist, wobei der Betätigungshebel in dem Betriebszustand von der Schiene (2) beabstandet ist und ausgehend von dem Betriebszustand um die Lagerachse (38) drehbar ist unter Realisierung eines weiteren Betriebszustands, in dem jeder der Führungsabschnitte (21, 22) in der ihm zugeordneten Führungsaufnahme (31, 32) angeordnet und von ihr senkrecht zur Längsrichtung (X) umgriffen ist und der Klemmabschnitt (552) des Betätigungshebels (55) in Pressanlage an der Schiene (2) anliegt, wobei insbesondere in dem weiteren Betriebszustand der Betätigungshebel (55) in einer fixierten Drehposition um die Lagerachse (38) relativ zum Schlittenkörper fixiert gehalten ist, und/oder dass der Betätigungshebel (55) im Betriebszustand mit einer Seite senkrecht zur Längsrichtung (X) zur Schiene (2) weist, wobei diese Seite des Betätigungshebels (55) eine Erstreckungslänge in Längsrichtung (X) aufweist und die Lagerachse (38) bezogen auf diese Erstreckungslänge in Längsrichtung (X) außermittig angeordnet ist.

13. Gleitlager nach den Ansprüchen 11 und 12,
**dadurch gekennzeichnet, dass**
die Betätigungskontur zusätzlich zu dem zweiten Konturabschnitt (502) einen dritten Konturabschnitt (503) aufweist, wobei der Betätigungsabschnitt (551) in dem weiteren Betriebszustand entlang des dritten Konturabschnitts (503) angeordnet ist, wobei insbesondere der zweite Konturabschnitt (502) zwischen dem ersten und dem dritten Konturabschnitt (501, 503) angeordnet ist.

14. Gleitlager (1) nach einem der Ansprüche 2 bis 13,
**dadurch gekennzeichnet, dass**
die erste Führungsaufnahme (31) den ersten Führungsabschnitt (21) über einen größeren Winkelbereich hinweg umschließt als die zweite Führungsaufnahme (32) den zweiten Führungsabschnitt (22).

15. Gleitlager (1) nach einem der Ansprüche 2 bis 14,
**dadurch gekennzeichnet, dass**
die erste Führungsaufnahme (31) durch einen von dem Betätigungsarm (5) ausgebildeten ersten Aufnahmeteil (54) und einen von dem Schlittenkörper ausgebildeten zweiten Aufnahmeteil ausgebildet ist, wobei insbesondere der erste Aufnahmeteil (54) an einer ersten transversalen Seite des ersten Führungsabschnitts (21) und der zweite Aufnahmeteil an einer zweiten transversalen Seite des ersten Führungsabschnitts (21) verläuft und/oder wobei der erste Aufnahmeteil (54) eine Aussparung aufweist, in der ein Längsabschnitt des zweiten Aufnahmeteils verläuft, wobei insbesondere der erste Aufnahmeteil (54) und der zweite Aufnahmeteil sich um weniger als 50 % in ihrer Längserstreckung unterscheiden, wobei auf die Längserstreckung des zweiten Aufnahmeteils Bezug genommen ist.

16. Gleitlager (1) nach einem der Ansprüche 2 bis 15,
**dadurch gekennzeichnet, dass**
in jeder Führungsaufnahme (31, 32) jeweils ein Gleitelement (41, 42) angeordnet ist, das einen Gleitabschnitt der Führungsaufnahme (31, 32) ausbildet, an dem im Betriebszustand der jeweils zugeordnete Führungsabschnitt (21, 22) bei einer Längsverschiebung des Schlittens (3) zur Schiene (2) in gleitender Anlage anliegt.

17. Gleitlager (1) nach den Ansprüchen 15 und 16,
**dadurch gekennzeichnet, dass**
in der ersten Führungsaufnahme (31) das Gleitelement (41) ausschließlich an dem zweiten Aufnahmeteil angeordnet ist, wobei insbesondere der erste Aufnahmeteil (54), insbesondere der Betätigungsarm (5) insgesamt, aus einem Gleitwerkstoff hergestellt ist.

18. Gleitlager (1) nach einem der Ansprüche 16 bis 17,
**dadurch gekennzeichnet, dass**
in zumindest eine der Führungsaufnahmen (31, 32) eine Queraussparung (37) mündet, wobei das in der Führungsaufnahme (31, 32) angeordnete Gleitelement (41, 42) sich in die Queraussparung (37) erstreckt unter Festlegung einer Position des Gleitelements (41, 42) relativ zum Schlittenkörper, wobei insbesondere das Gleitelement (41, 42) entlang der Längsrichtung verlaufende Rippen aufweist, die den Gleitabschnitt des Gleitelements (41, 42) ausbilden.

19. Verwendung eines Gleitlagers (1) nach einem der Ansprüche 2 bis 18,
**dadurch gekennzeichnet, dass**
der Schlitten (3) auf der Schiene (2) längsverschiebbar befestigt wird, indem zuerst der zweite Führungsabschnitt (22) der Schiene (2) in der zweiten Führungsaufnahme (32) des Schlittens (3) angeordnet wird und anschließend der erste Führungsabschnitt (21) der Schiene (2) in der ersten Führungsaufnahme (31) des Schlittens (3) angeordnet wird, wobei die Führungsabschnitte (21, 22) jeweils senkrecht zur Längsrichtung (X) in die ihnen jeweils zugeordnete Führungsaufnahme (31, 32) eingeführt werden und der Betätigungsarm (5) des Schlittens (3) ausgehend von einer Ruhelage in einer senkrecht zur Längsrichtung verlaufenden Verschieberichtung bewegt wird und dabei die erste Führungsaufnahme (31) so weit geöffnet wird, dass der erste Führungsabschnitt (21) der Schiene (2) in die erste Führungsaufnahme (319 senkrecht zur Längsrichtung einführbar ist, wobei nach Anordnung beider Führungsabschnitte (21, 22) in der ihnen jeweils zugeordneten Führungsaufnahme (31, 32) der Betätigungsarm (5) entgegen der Verschieberichtung bewegt wird unter Festlegung des Schlittens (3) relativ zur Schiene (2) senkrecht zur Längsrichtung (X).

## Claims

1. Carriage (3) for a sliding bearing (1), wherein the carriage (3) has a first and a second guide seat (31, 32) that are each elongated in the longitudinal direction (X) and extend next to one another and which are each designed to receive, in an operating state, a guide portion (21, 22) of a rail (2) respectively assigned to them while surrounding said guide portion and thereby fixing the carriage (3) to the rail in a longitudinally displaceable manner,
**characterized in that**
the carriage (3) has a carriage body and an actuating arm (5) which together form a first one of the guide seats (31, 32), the actuating arm (5) being fixed to the carriage body so as to be guided displaceably with respect thereto perpendicularly to the longitudinal direction (X) in order to enable opening of the first guide seat (31, 32) by displacing the actuating arm (5) for removing the assigned first guide portion (21, 22) from the first guide seat (31, 32) or for introducing the assigned first guide portion (21, 22) into the first guide seat (31, 32) along a removal direction running perpendicular to the longitudinal direction (X), wherein the guide device forms a stop which defines an end of the displacement path, the actuating arm (5) being displaceable relative to the base body (34) along the displacement path, starting from the operating state, until the stop is reached and forming an opening of the first guide seat when abutting against the stop, through which the first guide portion is removeable.

2. Sliding bearing (1) comprising a rail (2) and a carriage (3) according to claim 1, wherein the rail (2) has two guide portions (21, 22) which are elongated in a longitudinal direction (X) and extend next to one another, the rail has a rail body and the guide portions are each connected to the rail body via a web portion , and the guide seats each having a side opening which is continuous in longitudinal direction and through which, in the operating state, the web portions extend, wherein in the operating state each of the guide portions (21, 22) is arranged in the guide seat (31, 32) assigned to it and is surrounded by it perpendicularly to the longitudinal direction (X) while fixing the carriage (3) relative to the rail (2) perpendicularly to the longitudinal axis (X) and while ensuring longitudinal displaceability of the carriage (3) relative to the rail (2).

3. Sliding bearing (1) according to claim 2,
**characterized in that**
the carriage body comprises a base body (34) and a fixing body (35) which are detachably fixed to one another, the actuating arm being separable from the carriage body only after the base body (34) and the fixing body (35) have been detached from one another.

4. Sliding bearing (1) according to claims 2 or 3,
**characterized in that**
the guide device is formed by the base body (34) and the fixing body (35), wherein in particular the guide device is a linear guide device along a transverse direction (Y) running perpendicular to the longitudinal direction (X).

5. Sliding bearing (1) according to any of claims 2 to 4, **characterized in that**
when the actuating arm (5) abuts against the stop, an opening is formed in the first guide seat (31) through which the first guide portion (21) can be removed, the guide seats (21, 22) and the guide portions (31, 32) being designed to correspond to one another in such a way that the second guide portion (22) can be removed from the second guide seat (32) perpendicular to the longitudinal direction only after the first guide portion (21) has been removed from the first guide seat (31).

6. Sliding bearing (1) according to any of claims 2 to 5, **characterized in that**
the two guide portions (31, 32) each extend along a guide axis respectively assigned to them and extending in the longitudinal direction (X), wherein, when an abutment of the actuating arm (5) against the stop of the guide device is achieved, starting from the operating state, the second guide portion (22) is supported for rotation about its guide axis in the second guide seat (32), and the first guide portion (21) can be removed from the first guide seat (31) by rotation of the carriage (3) about the guide axis of the second guide portion (22).

7. Sliding bearing (1) according to any of claims 2 to 6, **characterized in that**
the rail (2) has a rail body and the guide portions (21, 22) are each connected to the rail body via a web portion, the guide seats (31, 32) each having a side opening which is continuous in the longitudinal direction (X) and through which, in the operating state, the web portions extend to the guide portions (21, 22) arranged in the guide seats (31, 32), wherein the web portions have a smaller width in a direction perpendicular to the longitudinal direction (X) than the guide portions (21, 22), wherein the side opening of the first guide seat (31, 32), in the operating state, has a width smaller than the width of the first guide portion (31) assigned to it, wherein when the actuating arm (5) abuts against the stop of the guide device, the width of the side opening is at least the width of the first guide portion (21).

8. Sliding bearing (1) according to any of claims 2 to 7, **characterized in that**
the guide device comprises a spring device (52) which acts on the actuating arm (5) relative to the base body (34) with a spring force directed away from the stop along the displacement path.

9. Sliding bearing (1) according to any of claims 2 to 8, **characterized in that**
the guide device has a further stop (33) which defines an end of the displacement path opposite the said end.

10. Sliding bearing (1) according to any one of the claims 2 to 9,
**characterized in that**
the carriage (3) comprises an actuating lever (55) supported on the carriage body for rotation about a bearing axis (38), wherein the actuating arm (5) can be displaced by means of the actuating lever (55), starting from the operating state, by rotating the actuating lever (55) about the bearing axis (38) for enabling opening of the guide seat (31, 32).

11. Sliding bearing (1) according to claim 10,
**characterized in that**
the actuating arm (5) has an actuating contour and the actuating lever (55) has an actuating portion (551) corresponding to the actuating contour, the actuating portion (551) being movable along the actuating contour by rotating the actuating lever (55) about the bearing axis (38), the actuating portion (551) abutting against a first contour portion (501) of the actuating contour when the first guide seat (31, 32) is opened to remove the associated first guide portion (21, 22), wherein in particular
the actuating contour has a second contour portion (502) the actuating portion (551) abuts against in the operating state, in particular abuts against said second contour portion (502) latched to the same.

12. Sliding bearing according to any of claims 10 to11,
**characterized in that**
the actuating lever (55) has a clamping portion (552), the actuating lever being spaced from the rail (2) in the operating state and, starting from the operating state, being rotatable about the bearing axis (38) while achieving the further operating state in which each of the guide portions (21, 22) is arranged in the guide seat (31, 32) assigned to it and is surrounded by it perpendicularly to the longitudinal direction (X), and the clamping portion (552) of the actuating lever (55) abuts against the rail (2) in pressing contact, wherein in particular, in the further operating state, the actuating lever (55) is held fixed in a fixed rotational position about the bearing axis (38) relative to the carriage body, and/or that
in the operating state, the actuating lever (55) faces the rail (2) with one side perpendicular to the longitudinal direction (X), this side of the actuating lever (55) having an extension length in the longitudinal direction (X) and the bearing axis (38) being arranged eccentrically with respect to this extension length in the longitudinal direction (X).

13. Sliding bearing according to the claims 11 and 12,
**characterized in that**
the actuating contour in addition to the second contour portion (502) has a third contour portion (503), the actuating portion (551) being arranged along the third contour portion (503) in the further operating state, in particular the second contour portion (502) being arranged between the first and third contour portions (501, 503).

14. Sliding bearing (1) according to any one of claims 2 to13,
**characterized in that**
the first guide seat (31) surrounds the first guide portion (21) over a larger angular range than the second guide seat (32) surrounds the second guide portion (22).

15. Sliding bearing (1) according to any one of claims 2 to14,
**characterized in that**
the first guide seat (31) is formed by a first receiving part (54) formed by the actuating arm (5) and a second receiving part formed by the carriage body, wherein in particular the first receiving part (54) extends on a first transverse side of the first guide portion (21) and the second receiving part extends on a second transverse side of the first guide portion (21) and/or wherein the first receiving part (54) has a recess in which a longitudinal portion of the second receiving part extends, wherein in particular the first receiving part (54) and the second receiving part differ by less than 50 % in their longitudinal extent, wherein reference being made to the longitudinal extent of the second receiving part.

16. Sliding bearing (1) according to any one of claims 2 to 15,
**characterized in that**
a respective sliding element (41, 42) is arranged in each guide seat (31, 32), which sliding element forms a sliding portion of the guide seat (31, 32), against which sliding portion the respectively assigned guide portion (21, 22) abuts in a sliding manner in the operating state during a longitudinal displacement of the carriage (3) relative to the rail (2).

17. Sliding bearing (1) according to claims 15 and 16,
**characterized in that**
in the first guide seat (31), the sliding element (41) is arranged exclusively on the second receiving part, wherein in particular the first receiving part (54), especially the actuating arm (5) as a whole, is made of a sliding material.

18. Sliding bearing (1) according to any of claims 16 to 17,
**characterized in that**
a transverse recess (37) opens into at least one of the guide seats (31, 32), the sliding element (41, 42) arranged in the guide seat (31, 32) extending into the transverse recess (37) while fixing a position of the sliding element (41, 42) relative to the carriage body, in particular the sliding element (41, 42) having ribs extending along the longitudinal direction, which ribs form the sliding portion of the sliding element (41, 42).

19. Use of a sliding bearing (1) according to any of claims 2 to 18,
**characterized in that**
the carriage (3) is mounted on the rail (2) in a longitudinally displaceable manner by first arranging the second guide portion (22) of the rail (2) in the second guide seat (32) of the carriage (3) and then arranging the first guide portion (21) of the rail (2) in the first guide seat (31) of the carriage (3), the guide portions (21, 22) each being inserted into the guide seat (31, 32) respectively assigned to them perpendicular to the longitudinal direction (X), and the actuating arm (5) of the carriage (3) being moved in a displacement direction running perpendicularly to the longitudinal direction, starting from a rest position, while opening the first guide seat (31) to such an extent that the first guide portion (21) of the rail (2) can be inserted into the first guide seat (31) perpendicularly to the longitudinal direction, wherein, after both guide portions (21, 22) have been arranged in the guide seat (31, 32) respectively assigned to them, the actuating arm (5) is moved counter to the displacement direction while fixing the carriage (3) relative to the rail (2) perpendicularly to the longitudinal direction (X).

## Revendications

1. Chariot (3) pour un palier lisse (1), dans lequel le chariot (3) comporte un premier et un deuxième logement-guide (31, 32) qui sont chacun allongés dans la direction longitudinale (X) et s'étendent l'un à côté de l'autre et sont conçus, en état de fonctionnement, pour recevoir une section de guidage (21, 22) d'un rail (2) qui leur est respectivement associé tout en entourant la section de guidage et en fixant ainsi le chariot (3) au rail (2) de manière à ce qu'il puisse être déplacé longitudinalement, **caractérisé en ce que**
le chariot (3) comporte un corps de chariot et un bras d'actionnement (5) qui forment ensemble un premier des logements de guidage (31, 32), le bras d'actionnement (5) étant fixé au corps de chariot de manière à pouvoir être déplacé perpendiculairement à la direction longitudinale (X) pour permettre l'ouverture du premier logement-guide (31, 32) par déplacement du bras d'actionnement (5) afin de retirer la première section de guidage (21, 22) associée du premier logement-guide (31, 32) ou pour insérer la première section de guidage (21, 22) associée dans le premier logement-guide (31, 32) le long d'une direction de retrait perpendiculaire à la direction longitudinale, le guide formant une butée qui définit une extrémité de la course de déplacement, le bras d'actionnement (5) étant déplaçable par rapport au corps de base (34) le long de la course de déplacement, à partir de la position de fonctionnement jusqu'à atteindre la butée, et formant une ouverture du premier logement-guide, à travers laquelle la première section de guidage peut être retirée, lorsque le bras d'actionnement (5) vient en butée contre la butée.

2. Palier lisse (1), comprenant un rail (2) et un chariot (3) selon la revendication 1, dans lequel le rail (2) comporte deux sections de guidage (21, 22) allongées dans la direction longitudinale (X) et s'étendant l'une à côté de l'autre, dans lequel le rail comporte un corps de rail, dans lequel les sections de guidage du rail sont chacune reliées au corps de rail par l'intermédiaire d'une partie d'entretoise, et les logements de guidage comportent chacun une ouverture latérale qui est continue dans la direction longitudinale, à travers laquelle les parties d'entretoise s'étendent à l'état de fonctionnement, dans lequel, à l'état de fonctionnement, chacune des sections de guidage (21, 22) est disposée dans son logement-guide associé (31, 32) et est entourée par celui-ci perpendiculairement à la direction longitudinale (X) tout en fixant le chariot (3) par rapport au rail (2) perpendiculairement à l'axe longitudinal (X) et tout en assurant une possibilité de déplacement longitudinal du chariot (3) par rapport au rail (2).

3. Palier lisse (1) selon la revendication 2,
**caractérisé en ce que**
le corps de chariot comporte un corps de base (34) et un corps de montage (35) qui sont fixés l'un à l'autre de manière amovible, le bras d'actionnement ne pouvant être séparé du corps de chariot qu'après avoir détaché le corps de base (34) et le corps de montage (35) l'un de l'autre.

4. Palier lisse (1) selon la revendication 2 ou 3, **caractérisé en ce que**
le guide est formé par le corps de base (34) et le corps de montage (35), le guide étant en particulier un guide linéaire dans une direction transversale (Y) perpendiculaire à la direction longitudinale (X).

5. Palier lisse (1) selon l'une quelconque des revendications 2 à 4,
**caractérisé en ce que**
lorsque le bras d'actionnement (5) vient en butée contre la butée, une ouverture du premier logement-guide (31) est formée à travers laquelle la première section de guidage (21) peut être retirée, les logements de guidage (21, 22) et les sections de guidage (31, 32) sont formés de manière correspondante les uns aux autres de telle sorte que la deuxième section de guidage (22) ne peut être retirée du deuxième logement-guide (32) perpendiculairement à la direction longitudinale qu'après le retrait de la première section de guidage (21) du premier logement-guide (31).

6. Palier lisse (1) selon l'une quelconque des revendications 2 à 5,
**caractérisé en ce que**
les deux sections de guidage (31, 32) s'étendent chacune le long d'un axe de guidage qui leur est attribué et qui s'étend dans la direction longitudinale (X), dans lequel, lorsque le bras d'actionnement (5) vient en butée contre le guide à partir de l'état de fonctionnement, la deuxième section de guidage (22) est supportée dans le deuxième logement-guide (32) de manière à pouvoir tourner autour de son axe de guidage et la première section de guidage (21) peut être retirée du premier logement-guide (31) par rotation du chariot (3) autour de l'axe de guidage de la deuxième section de guidage (22).

7. Palier lisse (1) selon l'une quelconque des revendications 2 à 6,
**caractérisé en ce que**
le rail (2) comporte un corps de rail et les sections de guidage (21, 22) sont chacune reliées au corps de rail par l'intermédiaire d'une partie d'entretoise, les logements de guidage (31, 32) comportant chacun une ouverture latérale qui est continue dans la direction longitudinale (X) et à travers laquelle, à l'état de fonctionnement, les parties de traverse s'étendent vers les sections de guidage (21, 22) disposées dans les logements de guidage (31, 32), les parties d'entretoise ayant une largeur dans une direction perpendiculaire à la direction longitudinale (X) inférieure à celle des sections de guidage (21, 22), l'ouverture latérale du premier logement-guide (31, 32), à l'état de fonctionnement, a une largeur qui est inférieure à la largeur de la première section de guidage (31) qui lui est associée, dans lequel, lorsque le bras d'actionnement (5) bute contre la butée du guide, la largeur de l'ouverture latérale est au moins égale à la largeur de la première section de guidage (21).

8. Palier lisse (1) selon l'une quelconque des revendications 2 à 7,
**caractérisé en ce que**
le guide comprend un dispositif à ressort (52) par lequel une force élastique dirigée à l'opposé de la butée le long de la course de déplacement est appliquée au bras d'actionnement (5) par rapport au corps de base (34).

9. Palier lisse (1) selon l'une quelconque des revendications 2 à 8,
**caractérisé en ce que**
le guide comprend une butée supplémentaire (33) qui définit une extrémité de la course de déplacement opposée à ladite extrémité.

10. Palier lisse (1) selon l'une quelconque des revendications 2 à 9,
**caractérisé en ce que**
le chariot (3) comprend un levier d'actionnement (55) qui est supporté sur le corps de chariot de manière à pouvoir tourner autour d'un axe de palier (38), dans lequel le bras d'actionnement (5), à partir de la position de fonctionnement, peut être déplacé au moyen du levier d'actionnement (55) en tournant le levier d'actionnement (55) autour de l'axe de palier (38) afin de permettre l'ouverture du logement-guide (31, 32).

11. Palier lisse (1) selon la revendication 10,
**caractérisé en ce que**
le bras d'actionnement (5) présente un contour d'actionnement et le levier d'actionnement (55) présente une section d'actionnement (551) correspondant au contour d'actionnement, la section d'actionnement (551) pouvant être déplacée le long du contour d'actionnement par rotation du levier d'actionnement autour de l'axe de palier (38), la section d'actionnement (551), lorsque le premier logement-guide (31, 32) est ouvert pour le retrait de la première section de guidage associée (21, 22), est en butée contre une première section de contour (501) du contour d'actionnement, dans lequel, en particulier, le contour d'actionnement comporte une deuxième section de contour (502) contre laquelle la section d'actionnement (551) est en butée à l'état de fonctionnement, en particulier contre celle-ci dans un état verrouillé avec la deuxième section de contour (502).

12. Palier lisse selon l'une quelconque des revendications 10 à 11,
**caractérisé en ce que**
le levier d'actionnement (55) comporte une section de serrage (552), dans laquelle le levier d'actionnement, à l'état de fonctionnement, est espacé du rail (2) et peut tourner autour de l'axe de palier (38) à partir de l'état de fonctionnement tout en atteignant un autre état de fonctionnement dans lequel chacune des sections de guidage (21, 22) est disposée dans le logement-guide (31, 32) qui lui est affecté et est entouré par celui-ci perpendiculairement à la direction longitudinale (X), et la partie de serrage (552) du levier d'actionnement (55) s'appuie contre le rail (2) en position de pression, dans lequel, en particulier, dans l'autre état de fonctionnement, le levier d'actionnement (55) est maintenu fixe par rapport au corps de chariot dans une position de rotation fixe autour de l'axe de palier (38), et/ou que le levier d'actionnement (55), dans la position de fonctionnement, est orienté avec un côté dans une direction perpendiculaire à la direction longitudinale (X) du rail (2), ce côté du levier d'actionnement (55) présentant une longueur d'extension dans la direction longitudinale (X) et l'axe de palier (38) étant disposé de manière excentrée dans la direction longitudinale par rapport à cette longueur d'extension.

13. Palier coulissant selon les revendications 11 et 12,
**caractérisé en ce que**
le contour d'actionnement comprend une troisième section de contour (503) en plus de la deuxième section de contour (502), dans lequel la section d'actionnement (551), dans l'état de fonctionnement ultérieur, est disposée le long de la troisième section de contour (503), dans lequel, en particulier, la deuxième section de contour (502) est disposée entre la première et la troisième section de contour (501, 503).

14. Palier lisse (1) selon l'une quelconque des revendications 2 à 13,
**caractérisé en ce que**
le premier logement-guide (31) entoure la première section de guidage (21) sur un angle plus grand que le deuxième logement-guide (32) entoure la deuxième section de guidage (22).

15. Palier lisse (1) selon l'une quelconque des revendications 2 à 14,
**caractérisé en ce que**
le premier logement-guide (31) est formé par une première partie de logement (54) formée par le bras d'actionnement (5) et une deuxième partie de logement formée par le corps coulissant, dans lequel, en particulier, la première partie de logement (54) s'étend sur un premier côté transversal de la première section de guidage (21) et la deuxième partie de logement s'étend sur un deuxième côté transversal de la première section de guidage et/ou dans lequel la première partie de logement (54) présente des évidements dans lesquels s'étend une section longitudinale de la deuxième partie de logement, la première partie de logement (54) et la deuxième partie de logement différant notamment de moins de 50 % dans leur extension longitudinale, la référence étant faite à l'extension longitudinale de la deuxième partie de logement.

16. Palier lisse (1) selon l'une quelconque des revendications 2 à 15,
**caractérisé en ce**
**qu'**un élément coulissant (41, 42) est disposé dans chaque logement-guide (31, 32) qui forme une partie coulissante du logement-guide (31, 32), où la section de guidage (21, 22) qui est respectivement associée vient en butée de manière coulissante pendant un déplacement longitudinal du chariot (3) par rapport au rail (2) à l'état de fonctionnement.

17. Palier lisse (1) selon les revendications 15 et 16, **caractérisé en ce que**
dans le premier logement-guide (31), l'élément coulissant (41) est disposé exclusivement sur la deuxième partie du logement, dans lequel, en particulier, la première partie du logement (54), en particulier le bras d'actionnement (5) dans son ensemble, est réalisée en un matériau coulissant.

18. Palier lisse (1) selon l'une quelconque des revendications 16 à 17,
**caractérisé en ce**
**qu'**un évidement transversal (37) débouche dans au moins l'un des logement-guides (31, 32), l'élément coulissant (41, 42) disposé dans le logement-guide (31, 32) s'étend dans l'évidement transversal (37) tout en fixant une position de l'élément coulissant (41, 42) par rapport au corps coulissant, dans lequel, en particulier, l'élément coulissant (41, 42) comprend des nervures s'étendant dans la direction longitudinale qui forment la section coulissante de l'élément coulissant (41, 42).

19. Utilisation d'un palier lisse (1) selon l'une quelconque des revendications 2 à 18,
**caractérisée en ce que**
le chariot (3) est fixé sur le rail (2) de manière à pouvoir se déplacer longitudinalement en disposant d'abord la deuxième section de guidage (22) du rail (2) dans le deuxième logement-guide (32) du chariot (3), puis en disposant la première section de guidage (21) du rail (2) dans le premier logement-guide (31) du chariot (3), les sections de guidage (21, 22) étant chacune insérées dans le logement-guide (31, 32) qui leur est respectivement attribué perpendiculairement à la direction longitudinale (X) et le bras d'actionnement (5) du chariot (3) étant déplacé à partir d'une position de repos dans une direction de déplacement perpendiculaire à la direction longitudinale, ouvrant ainsi le premier logement (31) jusqu'à ce que la première section de guidage (21) du rail (2) puisse être insérée dans le premier logement-guide (319) perpendiculairement à la direction longitudinale, dans lequel, après la disposition des deux sections de guidage (21, 22) dans les logements de guidage (31, 32) qui leur sont respectivement affectés, le bras d'actionnement (5) est déplacé dans le sens opposé au sens de déplacement, fixant ainsi le chariot (3) par rapport au rail (2) perpendiculairement à la direction longitudinale (X).
